# EUROPÄISCHE PATENTANMELDUNG

(11) **EP 1 252 866 A1**
(43) Veröffentlichungstag der Anmeldung: **30.10.2002**
(21) Anmeldenummer: 01810419.0
(22) Anmeldetag: 27.04.2001
(51) Int. Cl.: A61C 8/00

(54) **Anordnung für das Handling eines Implantats**

(71) Anmelder: Straumann Holding AG, 4437 Waldenburg (CH)
(72) Erfinder: Vogt, Martin, 4450 Sissach (CH); Schürch, Hans, 4425 Titterten (CH)
(74) Vertreter: Hepp, Dieter

(57) **Zusammenfassung**

Vorgeschlagen wird eine Anordnung für das Handling eines in Knochen einzusetzenden Implantats (**1**) mit einer auf das Implantat (**1**) lösbar aufsteckbaren Übertragungskappe (**2**) und einem am Implantat (**1**) formschlüssig angreifenden Adapter (**3**). Am Implantatkopf (**10**) sind ein interner oder externer Vielkant (**17**), eine äussere Implantatschulter (**11**) und eine unterhalb der Implantatschulter (**11**) gelegene Schulterkante (**110**) vorhanden. Die Übertragungskappe (**2**) hat eine zur Implantatschulter (**11**) komplementäre Kontaktfläche (**25**) sowie eine über die Schulterkante (**110**) rastende elastische Lippe (**26**). Der Adapter (**3**) besitzt einen Vielkant (**30**), der zum Eingriff in dem Vielkant (**17**) am Implantat (**1**) bestimmt ist. Ein Steckansatz (**33**) des Adapters (**3**) dient zum Ansetzen eines Eindrehinstruments. Bei auf das Implantat (**1**) aufgesteckter Übertragungskappe (**2**) und eingestecktem Adapter (**3**), kommt dessen Vielkant (**30**) mit dem Vielkant (**17**) am Implantat (**1**) in Eingriff. Der Steckansatz (**33**) des durch die Übertragungskappe (**2**) ragenden Adapters (**3**) liegt aussen. Übertragungskappe (**2**) und der darin steckende Adapter (3) sind lösbar miteinander verbunden. Die Lösekraft für das Trennen der Verbindung zwischen Implantat (**1**) und Übertragungskappe (**2**) ist grösser bemessen, als die Lösekraft für das Trennen der Verbindung zwischen Übertragungskappe (**2**) und Adapter (**3**). Die Anordnung vereinfacht das Prozedere beim Einsetzen der Implantate (**1**) sowie bei der Abdrucknahme. Die Belastung auf neu eingesetzte Implantate (**1**) verringert sich und zugleich reduziert sich das benötigte Instrumentarium.

## Beschreibung

### Anwendungsgebiet der Erfindung

Die vorliegende Erfindung betrifft eine Anordnung für das Handling eines Implantats, das am Implantatkopf eine axial austretende Bohrung mit einer nicht-rotationssymmetrischen Innenkontur, vorzugsweise einen Innenvielkant, aufweist. Innerhalb der Axialbohrung kann ein Innengewindeabschnitt angeordnet sein. Die Mündung der Axialbohrung wird von einer Implantatschulter umgeben, die den oberen Abschluss des Implantats bildet. Derartige Implantate werden z.B. im Dentalbereich eingesetzt und sind dazu bestimmt, in eine im Kieferknochen vorbereitete Aufnahmebohrung eingesetzt zu werden. Schraubenimplantate werden in eine im Knochen vorbereitete Innengewindebohrung eingedreht oder besitzen ein selbstschneidendes Aussengewinde, das sich beim Eindrehen in ein präpariertes Sackloch das Innengewinde selbst erzeugt. Zylinderimplantate hingegen sind äusserlich gewindelos und werden in ein im Knochen vorbereitetes Sackloch eingedrückt. Die hiesige Erfindung bezieht sich vorrangig auf enossale Dentalimplantate in Schraubenform.

Für den Transfer zum Implantatbett, sowie zum Eindrehen bei Schraubenimplantaten, gehört ein Adapter zu der Anordnung, dessen unterer Schaft komplementär in der nicht-rotationssymmetrischen Innenkontur im Implantatkopf steckt. Der obere Fortsatz des Adapters weist eine nicht-rotationssymmetrische Kontur, vorzugsweise einen Aussenvielkant auf, um daran ein Eindrehinstrument anzusetzen. Zur Anordnung gehört ferner eine über die Implantatschulter aufrastbare Kappe. Zum Transport und zur Aufbewahrung des Implantats ist, in Erweiterung der Anordnung, ein Behältnis vorgesehen. Während der chirurgischen Operation lässt sich das Implantat aus dem Behältnis, mit dem am Fortsatz des Adapters angesetzten Eindrehinstrument, unter sterilen Bedingungen entnehmen und mit diesem Instrument dann in die Aufnahmebohrung im Knochen einbringen.

### Stand der Technik

Für das Handling des vorgenannten Implantattyps sind verschiedene Adapter bekannt; zur Übertragung der geometrischen Kontur im Umfeld des im Patienten eingesetzten Implantats existieren unterschiedliche Abdruckkappen und für die Aufbewahrung solcher Implantate sind vielfältig gestaltete Ampullen auf dem Markt.

In der WO 98/26726 wird eine Adapterhülse vorgeschlagen, die sich am Rand einer Durchgangsbohrung in einer Zwischenwand innerhalb der Sterilampulle abstützt. Hauptsächlich, neben der Halterung des Implantats in der Sterilampulle, ist die Adapterhülse zur zeitweiligen Verbindung zwischen dem Implantat und einem Manipulierorgan vorgesehen. Das erste Ende der Adapterhülse ist auf einen Steckansatz des positionierten Implantats wieder lösbar aufgesteckt; an das zweite Ende der Adapterhülse lässt sich die Spitze des Manipulierorgans wieder lösbar ansetzen. Mit dem Ansetzen des Manipulierorgans an die mit dem Implantat bereits verbundene Adapterhülse hat man das Implantat ergriffen. Somit entsteht eine zweifache Steckverbindung zwischen Implantat, Adapterhülse und Manipulierorgan, mit der sich das Implantat quasi berührungslos transferieren lässt. Beim Abziehen des Manipulierorgans vom Implantat löst sich nur die Steckverbindung zwischen dem Implantat und dem Manipulierorgan. Diese Adapterhülse stellt ein weiteres Bauteil dar und ist nicht zur Übertragung des beim Eindrehen des Implantats mit einem Eindrehinstrument erzeugten Drehmoments geeignet.

Aus der US 5,538,428 ist bekannt, zwischen dem Deckel einer Ampulle und dem darin gelagerten Implantat einen Adapter anzuordnen, welcher aus einem Hülsenteil und einer durch das Hülsenteil hindurch ragenden, drehbaren Schraube besteht. Nach unten, zur Implantatschulter gewandt, besitzt das Hülsenteil einen Innenvielkant zur komplementären Aufnahme des die Implantatschulter nach oben überragenden Aussenvielkants. Im wesentlichen ist das Hülsenteil äusserlich als ein aufwärts gerichtetes Aussenvielkant-Segment gestaltet. Zuunterst weist die Schraube einen Aussengewindeabschnitt auf, der zum Eingriff in die im Implantat vorhandene Innengewindebohrung bestimmt ist. Die Schraube besitzt einen das Hülsenteil überragenden Fortsatz mit einer nicht-rotationssymmetrischen Kontur zum Ansetzen eines Eindrehinstruments, so dass sich über den, mit dem Implantat verbundenen Adapter, die drehende Einschraubbewegung übertragen lässt. Um den Adapter vom Implantatkopf abzunehmen, muss man den Aussengewindeabschnitt der Schraube aus der Innengewindebohrung im Implantat herausdrehen. Damit ist diese Konstruktion nur bei Implantaten mit einem Innengewinde und einem die Implantatschulter überragenden Aussenvielkant zu verwenden. Überdies verkompliziert das nötige Abschrauben des Adapters vom Implantat das operative Prozedere.

In der WO 98/55039 wird ein Adapter der gleichen Gattung beschrieben. Wiederum sind ein Hülsenteil und eine durch das Hülsenteil hindurch ragende, drehbare Schraube vorgesehen. Nach unten, zur Implantatschulter gewandt, besitzt das Hülsenteil eine Gegenschulter zur komplementären Aufnahme der Implantatschulter und Reibschluss mit dieser. Über der Schulterpartie ist das Hülsenteil als Aussenvielkant-Segment beschaffen. Zuunterst besitzt die Schraube einen Aussengewindeabschnitt zum Eingriff in die im Implantat vorhandene Innengewindebohrung. Die Schraube weist einen das Hülsenteil überragenden Fortsatz mit einem Aussenvielkant zum Ansetzen eines Eindrehinstruments auf. Im wesentlichen über die Reibschlussverbindung zwischen der Gegenschulter im Hülsenteils des Adapters und der Implantatschulter wird das mit dem angesetzten Eindrehinstrument ausgeübte Drehmoment zum Eindrehen des Implantats in den Patientenknochen übertragen. Zum Lösen des Adapters vom Implantatkopf muss man das Aussenvielkant-Segment am Hülsenteil mit einem Konterschlüssel fassen und zugleich, mit dem nun entgegengesetzt rotierenden Eindrehinstrument, den Aussengewindeabschnitt der Schraube mit dem Innengewinde im Implantatkopf ausser Eingriff bringen. Bei Dentalimplantaten - im engen Raum eines Patientenmundes mit vorhandenen Nachbarzähnen -, erfordern diese Arbeitsabläufe mit zwei Instrumenten hohe Fertigkeiten des operierenden Chirurgen, sind aber stets diffizil und zeitaufwendig. Bei wechselnden Positionen der eingesetzten Implantate, insbesondere im Ober- bzw. Unterkiefer, kann es problematisch sein, auf Anhieb die lösende Drehrichtung beim Abnehmen des Adapters zu erkennen. Schliesslich ist diese Konstruktion eines Adapters ebenfalls nur für Implantate mit einem Innengewinde zu verwenden.

Die in der WO 98/55039 beschriebene Ampulle zum Transport, zur Aufbewahrung und zur Bereitstellung eines Implantats unmittelbar vor dem Einsetzen in den Knochen, hat sich als äusserst vorteilhaft erwiesen. Aus diesem Grunde kann diese Ampulle auch im Zusammenhang mit der hiesigen Erfindung wieder Verwendung finden. Die Ampulle besitzt einen äusseren Mantel und lässt sich in eine Aussenkapsel einsetzen. Eine Fixierpartie in der Ampulle dient zum Einhängen des Adapters, welcher koaxial mit dem Implantat verbunden ist und es auf diese Weise hält. Durch eine seitliche, grossflächige Aussparung im Mantel ist das in der Ampulle gehalterte Implantat mittels eines am Adapter angesetzten Instruments berührungslos entnehmbar.

Ein weiteres Problemfeld stellt die Erfassung der geometrischen Kontur - als Abdrucknahme - im Umfeld des im Patienten eingesetzten Implantats dar. Der genommene Abdruck dient in der Dentalimplantologie der Übertragung auf ein Meistermodell, auf dem die passgerechte Suprastruktur angefertigt wird, welche man auf das eingesetzte Implantat aufsetzt. Hierbei ist aus bekannten Gründen höchste Präzision gefordert.

In der EP 0 879 024 B1 wird eine Abdruckkappe zur Übertragung eines aus einer menschlichen Gewebestruktur austretenden Abschlusses eines in den Humankörper eingesetzten Implantats, inklusive möglicher Aufbauten auf ein Meistermodell beschrieben. Das nach aussen gerichtete Implantatende weist an seiner Aussenseite eine hinterschnittene Kontur auf, während die Abdruckkappe eine zur hinterschnittenen Kontur komplementäre, darin eingreifende Geometrie besitzt. Dies ist ein Schnappelement in Form einer zirkulären Lippe oder einzelner Greiforgane. Die hinterschnittene Kontur wird z.B. durch eine zum Implantatlager hin sich trompetenförmig verjüngende Implantatgeometrie gebildet. Der trompetenförmige Implantatabschluss hat angrenzend an den Bereich des grössten Durchmessers eine abgewinkelte, d.h. konische Implantatschulter, auf welcher sich die an der Abdruckkappe vorgesehene Kappenschulter abstützt. Mit dieser Abdruckkappe wurde gegenüber dem zuvor bekannten Stand der Technik eine markante Vereinfachung des Verfahrens der Abdrucknahme bis zur Herstellung des Meistermodells erzielt. Gleichzeitig gelang damit auch eine weitere Verbesserung in der Präzision. Teils problematisch ist jedoch das exakte Aufsetzen der Abdruckkappe in engen Positionen, wie z.B. im Patientenmund bei gesetzten Dentalimplantaten, mit auf die Implantatschulter ragendem Zahnfleisch und während der Operation freigesetztem Blut.

### Aufgabe der Erfindung

Angesichts der oben genannten Nachteile der bis dato bekannten Adapter zum Ergreifen und Halten von Implantaten sowie zur Abdrucknahme liegt der Erfindung das Problem zugrunde, eine vervollkommnete Anordnung für diese Zwecke zu schaffen. Hierbei gilt es, die Vorzüge des Prinzips einer auf die Implantatschulter aufrastbaren Abdruckkappe gemäss der EP 0 879 024 B1 weiterhin zu nutzen. Die Anordnung soll es erlauben, ein mit dem Adapter verbundenes Implantat in einem Behältnis so unter sterilen Bedingungen zu lagern, dass sich ein Eindrehinstrument zur Entnahme der Anordnung aus dem Behältnis an den Adapter setzen lässt. Als Behältnis soll die Ampulle des konstruktiven Prinzips, wie in der WO 98/55039 offenbart, verwendet werden können, wobei ein alternativ einsetzbares Behältnis mit weiteren vorteilhaften Fertigungs- und Gebrauchswerteigenschaften vorzuschlagen ist.

Der Adapter soll sich effizient herstellen und vielfach nutzen lassen. Die Verbindung des Adapters mit dem Implantat muss sicheren Halt gewährleisten, d.h. in der vorbereitenden Phase der chirurgischen Operation und während der Operation müssen die zur Applikation vorgesehenen Implantate stets sicher geführt werden können, dürfen sich keinesfalls unkontrolliert lösen und die Sterilitätsanforderungen müssen erfüllt sein. Der Adapter soll die Entnahme des Implantats aus dem Behältnis mit dem angesetzten Eindrehinstrument und das Einsetzen des Implantats in den Knochen wesentlich vereinfachen. Schliesslich soll sich der Adapter vom Implantat aber unproblematisch wieder lösen lassen.

### Übersicht über die Erfindung

Die Anordnung für das Handling eines in Knochen einzusetzenden Implantats besteht aus einer auf das Implantat lösbar aufsteckbaren Übertragungskappe und einem am Implantat eingreifenden Adapter. Das Implantat besitzt einen Implantatkopf und eine sich vom Implantatkopf erstreckende Wurzelpartie. Der Implantatkopf weist eine intern gelegene, nicht-rotationssymmetrische Innenkontur oder alternativ eine derartige Aussenkontur, eine äussere Implantatschulter und eine unterhalb der Implantatschulter gelegene Schulterkante auf. Unterhalb der Schulterkante besitzt das Implantat eine Hinterschneidung. Die Übertragungskappe weist eine zur Implantatschulter komplementäre Kontaktfläche und eine die Schulterkante unterfassende, in die Hinterschneidung eingreifende elastische Lippe auf. Der Adapter hat eine Mitnehmersektion, die zum formschlüssigen Eingriff mit der Innenkontur bzw. Aussenkontur am Implantat bestimmt ist. Ferner hat der Adapter einen Steckansatz, der zum Ansetzen eines Instruments bestimmt ist. Die Übertragungskappe ist mit einem Axialdurchgang zum Durchtritt des Adapters zum Implantat versehen. Bei auf das Implantat aufgesteckter Übertragungskappe und eingestecktem Adapter greift dessen Mitnehmersektion an der Innenkontur bzw. an der alternativ vorhandenen Aussenkontur formschlüssig an. Der Adapter liegt im Axialdurchgang, und der Steckansatz des Adapters ragt aus der Übertragungskappe heraus.

Die nachfolgenden Merkmale stellen vorteilhafte Ausführungsformen der Erfindung dar.

Der durch den Axialdurchgang durchtretende Adapter und die Übertragungskappe sind lösbar miteinander verbunden. Die Lösekraft für das Trennen der Verbindung zwischen Implantat und Übertragungskappe ist grösser bemessen ist, als Lösekraft für das Trennen der Verbindung zwischen Übertragungskappe und Adapter. Zur lösbaren Verbindung zwischen Übertragungskappe und Adapter weist die Übertragungskappe einen inneren Abschnitt und der Adapter eine Haltesektion auf, die miteinander eine Reibschlussverbindung eingehen. Alternativ besitzt die Übertragungskappe eine elastisch verformbare Kontur und der Adapter eine dazu komplementäre Gegenkontur, die miteinander eine kraftschlüssige Verbindung eingehen. Schliesslich können der innere Abschnitt und die Haltesektion für die Reibschlussverbindung sowie die Kontur und die Gegenkontur für die Kraftschlussverbindung zusammen vorhanden sein. Der innere Abschnitt an der Übertragungskappe ist eine zylindrische Innenwandung. Die Haltesektion am Adapter ist ein Zylinderabschnitt. Die verformbare Kontur an der Übertragungskappe ist eine den Axialdurchgang verengende Wulst. Die Gegenkontur am Adapter ist eine Radialnut, in welche die Wulst einrastet.

Die Übertragungskappe ist einstückig und setzt sich aus einem topfförmigen Hohlkörper und einem sich daran angeordneten Retentionsflügel zusammen. Der Axialdurchgang mündet einerseits an der Unterseite des Hohlkörpers und andererseits auf der Oberseite des Retentionsflügels. Die elastische Lippe engt den Axialdurchgang ein und ist zuunterst am Hohlkörper vorgesehen ist. Der Hohlkörper weist die innere Kontaktfläche als auf die Implantatschulter passenden Konusabschnitt auf. Zwischen Hohlkörper und Retentionsflügel ist eine Nut zum Abtrennen des Retentionsflügels vorhanden, der sich im wesentlichen waagerecht, also senkrecht zum Axialdurchgang stehend, erstreckt. Auf der Oberseite des Retentionsflügels ist der mündende Axialdurchgang von einem Kragen umgeben, an dem eine nach innen gewandte Wulst ausgebildet ist. Zur Erhöhung der Elastizität des Kragens können darin Einschnitte vorgesehen sein.

Die nicht-rotationssymmetrische Innenkontur im Implantat ist ein Innenvielkant, z.B. ein Achtkant. Oder die alternativ vorgesehene Aussenkontur am Implantat ist ein Aussenvielkant, z.B. ein Achtkant. Die Mitnehmersektion am Adapter - bei vorhandener Innenkontur im Implantat - ist ein Aussenvielkant, z.B. ein Achtkant. Oder die Mitnehmersektion am Adapter - bei alternativ vorhandener Aussenkontur am Implantat - ist ein Innenvielkant, z.B. ein Achtkant. Der Steckansatz am Adapter ist ein Aussenvielkant ist. Am Adapter schliesst sich an die Mitnehmersektion die Haltesektion an. Zwischen Haltesektion und Steckansatz liegt eine Zwischensektion, welche einen ersten und einen zweiten Bund aufweist, zwischen denen ein im Durchmesser reduzierter Abschnitt liegt. Der erste Bund hat die Radialnut und zwischen dem Steckansatz und dem zweiten Bund ist eine Ringnut zur Aufnahme eines Halteringes vorhanden.

Das Implantat verjüngt sich unterhalb der Schulterkante zur Wurzelpartie hin trompetenförmig, wodurch die Hinterschneidung entsteht. Die Implantatschulter hat eine Neigung im Bereich von 30°. Die Wurzelpartie ist mit einem vorzugsweise selbstschneidenden Aussengewinde versehen. Bei vorhandener Innenkontur am Implantat oder bei alternativ vorhandener Aussenkontur am Implantat kann innerhalb eines Sacklochs, ein Innengewindeabschnitt angeordnet sein.

Die Kombination aus Implantat, auf das Implantat aufgesteckter Übertragungskappe und durch die Übertragungskappe durchgestecktem Adapter ist, für die operative Applikation in einem sterilen Behältnis aus einer fixierten Lage lösbar, angeordnet. Hierbei ist der Steckansatz für das Ergreifen mittels eines Instruments - zumeist ein Eindrehinstrument, mit eventuell zuvor an den Steckansatz angestecktem Kupplungsteil - zugänglich positioniert. Das Behältnis für die Kombination ist eine in eine Aussenkapsel einsetzbare Ampulle mit einem äusseren Mantel, einer seitlichen, grossflächigen Aussparung im Mantel, durch welche das in der Ampulle gehalterte Implantat herausnehmbar ist, und einer Haltepartie mit einer lateral offenen Einbuchtung, die mit der Aussparung in die gleiche Richtung weist. Der die Übertragungskappe und das Implantat tragende Adapter ist mit seiner Zwischensektion in die Einbuchtung lösbar eingerastet, wodurch das vom Adapter getragene Implantat berührungslos in der Ampulle gelagert ist.

Das Behältnis für die Kombination kann alternativ eine Blisterpackung mit einer tiefgezogenen Bodenform sein, die eine mehrgliedrige Vertiefung aufweist, welche sich weiträumig über die Aussenkontur der Anordnung ausdehnt. Zur Vertiefung gehören eine Instrumenten-Aussparung, für den dort hinein ragenden Steckansatz des Adapters, sowie eine der Instrumenten-Aussparung gegenüber liegende Implantat-Aussparung, in die das Implantat mit der aufgesteckten Übertragungskappe hineinragt.

Zwischen der Instrumenten-Aussparung und der Implantat-Aussparung gibt es zwei querlaufende, zueinander fluchtende Führungsschlitze für die leicht klemmende Aufnahme des Retentionsflügels der Übertragungskappe, wodurch das von der Übertragungskappe gestützte Implantat berührungslos in der Bodenform gelagert ist. Die Bodenform ist mit einem Überzug überdeckt ist, und innerhalb der Bodenform können weitere Vertiefungen, z.B. für die Einlagerung einer Einheilschraube, vorhanden sein.

Beim Abziehen einer Abdruckform vom Implantat, nach genommenem Abdruck, löst sich die Übertragungskappe und verbleibt in der Abdruckform. In die in der Abdruckform verbliebenen Abdruckkappe ist ein Manipulierimplantat, mit einer analogen Schulterkante und Hinterschneidung, rastend einsteckbar. Beim Trennen des mit Modellmasse aufgefüllten Abdrucks entsteht ein Meistermodell mit darin eingebettetem Manipulierimplantat. Hierbei verbleibt die vorzugsweise aus ausbrennbarem Kunststoff bestehende Übertragungskappe wieder in der Abdruckform.

Dank der erfindungsgemässen Anordnung vereinfacht sich das Prozedere beim Einsetzen der Implantate sowie bei der Abdrucknahme. Das benötigte Instrumentarium verringert sich; so erübrigt sich eine Hülse am Adapter mit dem Aussenvielkant als Kontermutter, wodurch das bis anhin nötige Instrument - ein Halteschlüssel - nicht mehr erforderlich ist. Es entfällt damit insbesondere der diffizile Arbeitsschritt des Entkonterns zwischen Adapter und Implantat nach dem Einsetzen des Implantats in den Körper des Patienten. Durch die beim Implantieren bereits auf dem Implantat sitzende Abdruckkappe entfällt auch dieser teils problematische Arbeitsschritt. Hierdurch verringert sich die Belastung auf das eingesetzte Implantat insgesamt in zweifacher Hinsicht, denn es erübrigen sich sowohl das Entkontern des Adapters als auch das Aufrasten der Abdruckkappe, was an schwieriger zugänglichen Positionen mitunter recht heikel ist. Im Ergebnis wird die Konstruktion des Adapters unaufwendiger, es verringert sich das bisher nötige Instrumentarium und das Prozedere des Implantierens sowie der Abdrucknahme vereinfachen sich deutlich. Die Belastung auf das neu gesetzte Implantat wird erheblich reduziert. Schliesslich kommen weiterhin alle Vorzüge, in Kombination mit der bisher bewährten Ampulle zur Geltung. Die als alternatives Behältnis vorgeschlagene Blisterpackung verbessert darüber hinaus die Effizienz der Verpackung der Anordnung.

### Kurzbeschreibung der beigefügten Zeichnungen

Mit Bezug auf die beiliegenden Zeichnungen erfolgt nachstehend die detaillierte Beschreibung eines Ausführungsbeispiels der erfindungsgemässen Anordnung. Im Interesse einer kompletten Darstellung wird dabei auch die bereits bekannte Ampulle zur Aufbewahrung des Implantats, soweit für die Erläuterung nötig, beschrieben. Am Beschreibungsende werden mögliche Modifikationen erwähnt. Es zeigen:

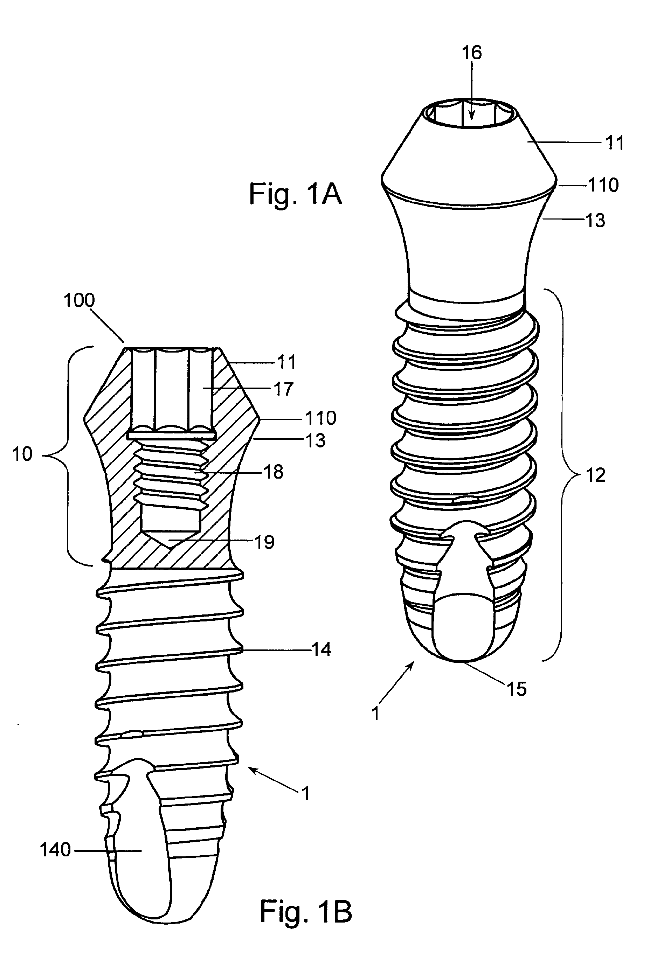

- Figur 1A:: ein weitgehend bekanntes Implantat in Form einer Vollschraube als Perspektivansicht;
- Figur 1B:: das Implantat gemäss Figur 1A als Teilschnitt;
- Figur 2A:: eine erfindungsgemässe Übertragungskappe als Perspektivansicht;
- Figur 2B:: die Übertragungskappe gemäss Figur 2A, in anderer Perspektive, als Teilschnitt;
- Figur 2C:: die Darstellung gemäss Figur 2B, mit einem Kragen über dem Retentionsflügel;
- Figur 3A:: ein erfindungsgemässer Adapter in Perspektivansicht;
- Figur 3B:: der Adapter gemäss Figur 3A mit aufgesetztem O-Ring;
- Figur 3C:: der Adapter gemäss Figur 3A, in anderer Perspektive, mit zusätzlicher Rastnut zum Eingriff der Rastelemente des Kragens der Übertragungskappe gemäss Figur 2C;

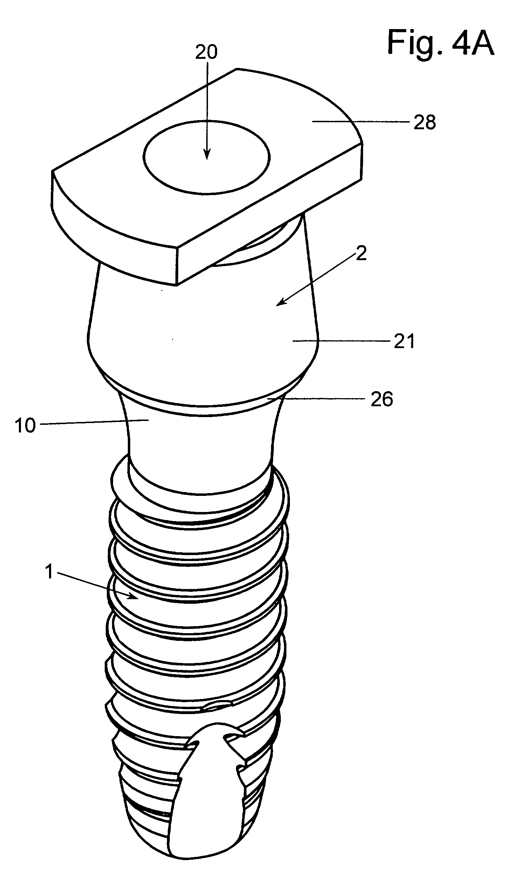

- Figur 4A:: das Implantat gemäss Figur 1A mit aufgesetzter Übertragungskappe gemäss Figur 2A als Perspektivansicht;

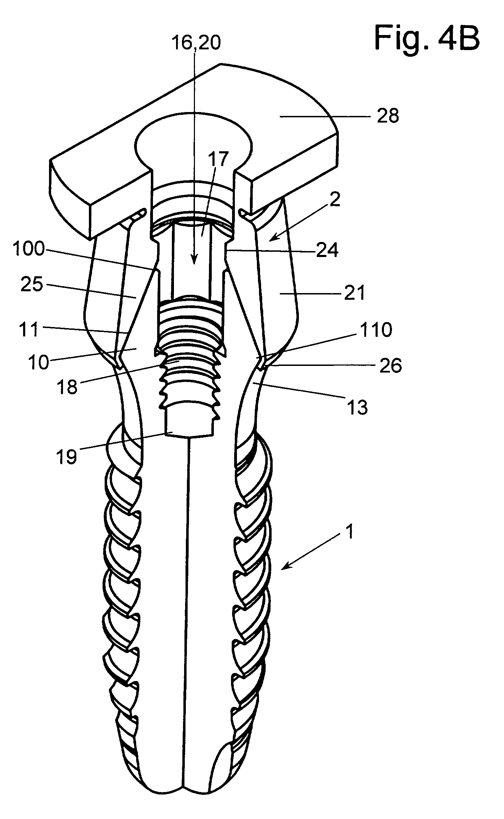

- Figur 4B:: die Darstellung gemäss Figur 4A als Teilschnitt;
- Figur 5A:: die Kombination aus Implantat und Übertragungskappe gemäss Figur 4A mit eingesetztem Adapter gemäss Figur 3A als Perspektivansicht;
- Figur 5B:: die Darstellung gemäss Figur 5A als Teilschnitt;
- Figur 5C:: die Kombination gemäss Figur 5A, in verkleinerter, anderer Perspektive mit der modifizierten Übertragungskappe gemäss Figur 2C, als Teilschnitt;

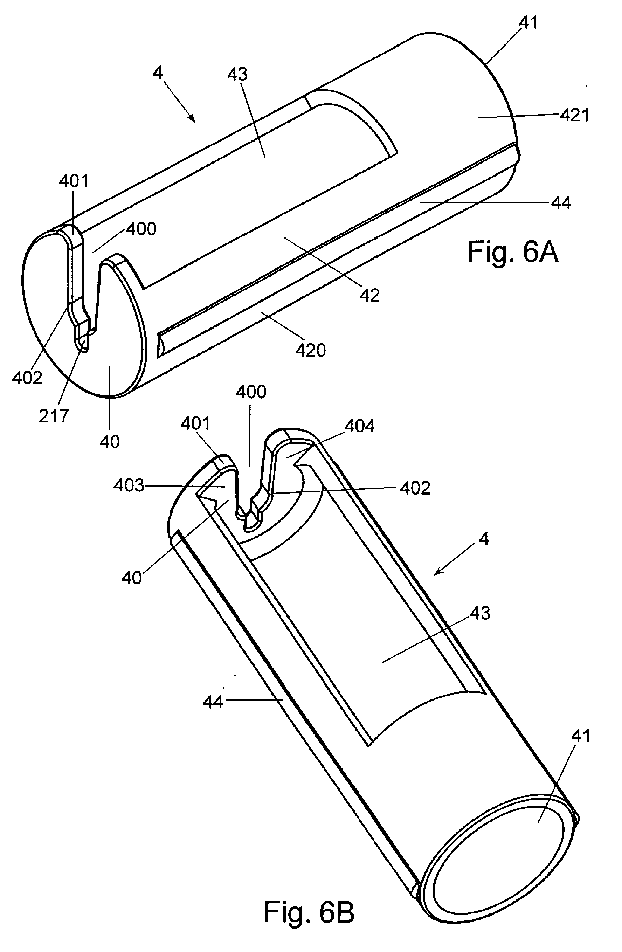

- Figur 6A:: eine an sich bekannte Ampulle in der Perspektivansicht auf die Aussenseite der Fixierpartie;
- Figur 6B:: die Ampulle gemäss Figur 6A in der Perspektivansicht auf die Innenseite der Fixierpartie;

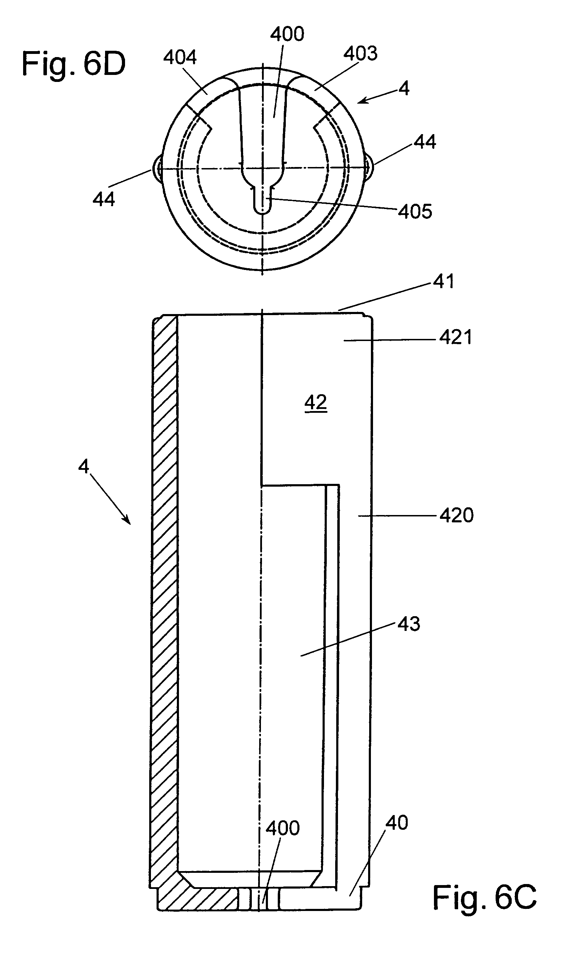

- Figur 6C:: die Ampulle gemäss Figur 6A als Teilschnitt in der Frontansicht;
- Figur 6D:: die Ampulle gemäss Figur 6A in der Draufsicht auf die Aussenseite der Fixierpartie;

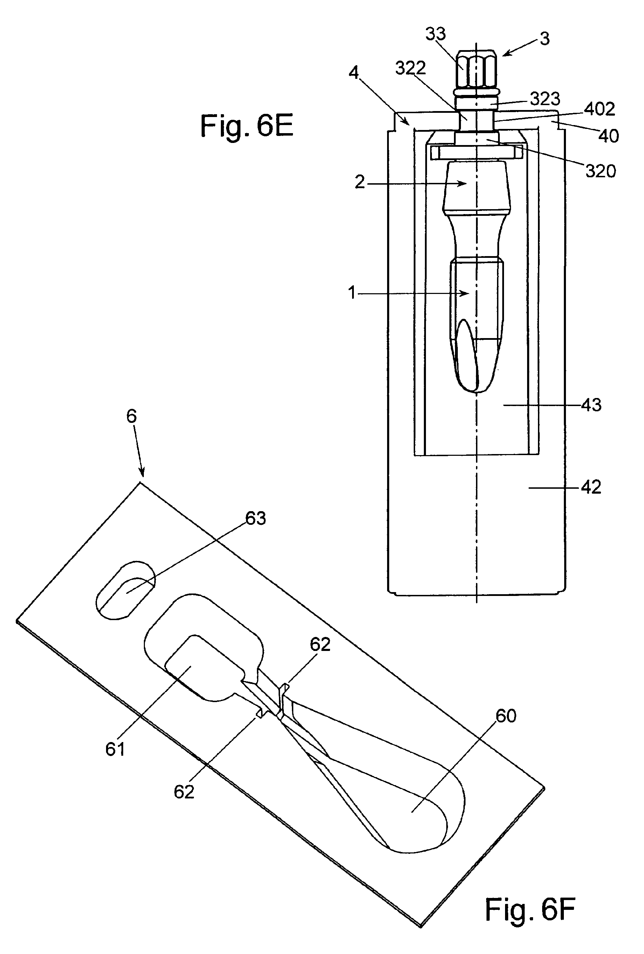

- Figur 6E:: die Kombination aus Implantat gemäss Figur 1A, Übertragungskappe gemäss Figur 2A und Adapter gemäss Figur 3B in die Ampulle gemäss Figur 6A eingesetzt, in der Frontansicht;
- Figur 6F:: eine Blisterpackung als alternatives Behältnis zur Aufbewahrung der Kombination aus Implantat gemäss Figur 1A, Übertragungskappe gemäss Figur 2A und Adapter gemäss Figur 3A, in perspektivischer Draufsicht;

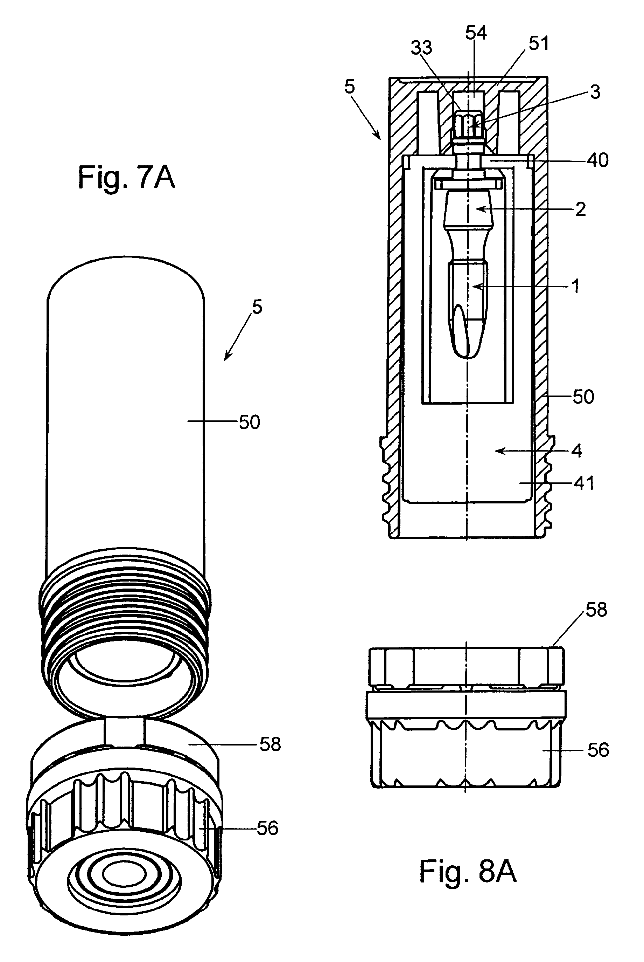

- Figur 7A:: eine an sich bekannte Aussenkapsel, mit abgeschraubtem Deckel, als Perspektivansicht;

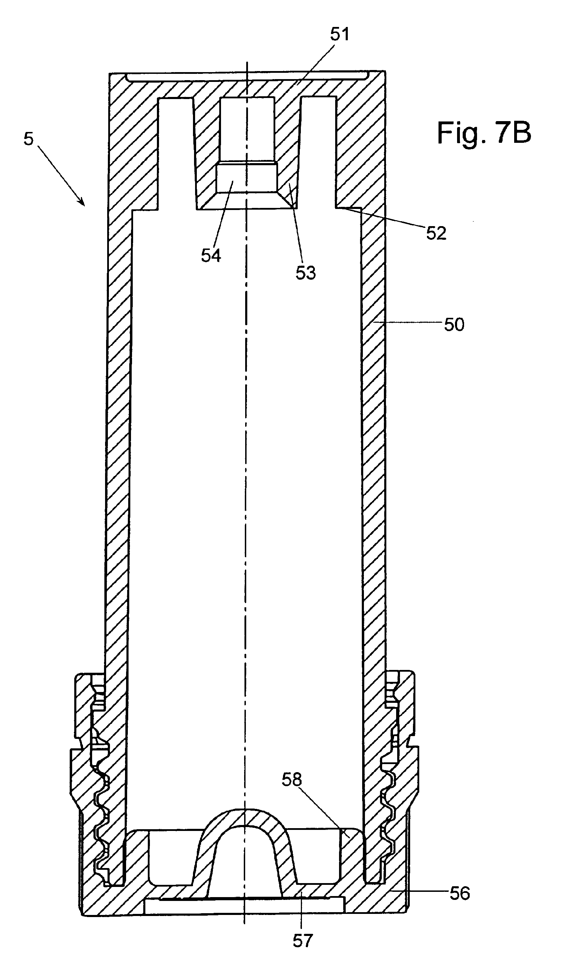

- Figur 7B:: die Aussenkapsel gemäss Figur 7A, mit aufgeschraubtem Deckel, als Vertikalschnitt;
- Figur 8A:: die Kombination gemäss Figur 6E aus Implantat, Übertragungskappe und Adapter in die Ampulle eingesetzt und von einer Aussenkapsel gemäss Figur 7A umgeben, mit abgeschraubtem Deckel, als Teilschnitt;

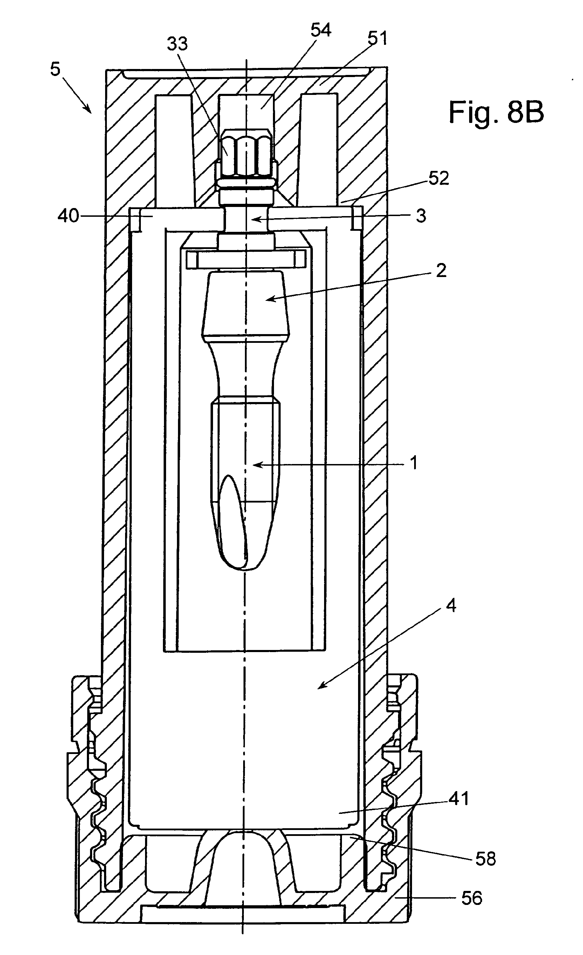

- Figur 8B:: die Darstellung gemäss Figur 8A, mit bestückter Ampulle in verschlossener Aussenkapsel, während der Lagerung oder dem Transport sowie in *Ausgangssituation* beim operativen Handling, als Teilschnitt;
- Figuren 9A bis 10M:: das prinzipielle operative Handling der Anordnung, beginnend bei der *Ausgangssituation* gemäss Figur 8B, bis zur Erstellung des Meistermodells und angrenzenden Schritten;

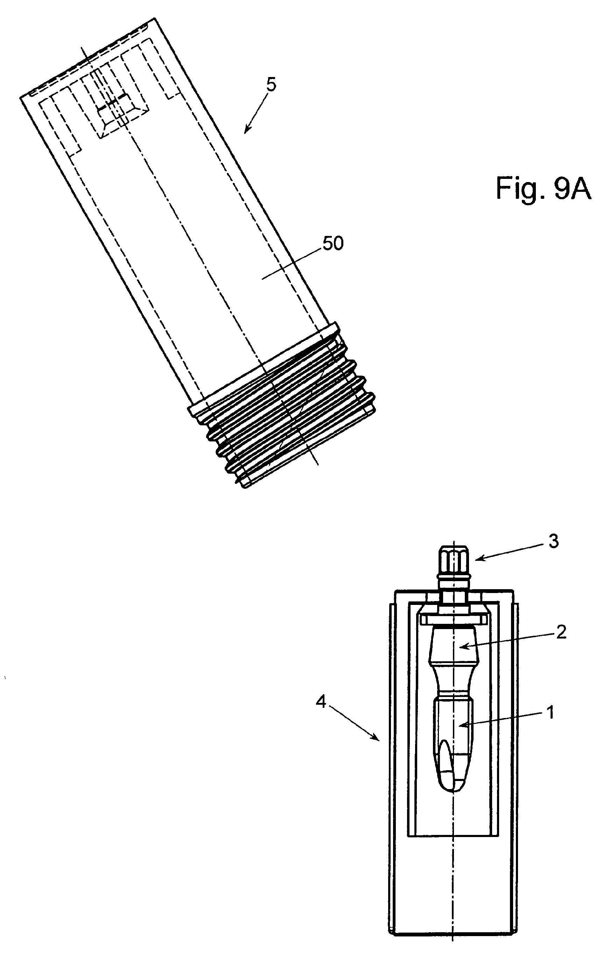

- Figur 9A:: *Schritt 1 -* Öffnen der Aussenkapsel durch Abschrauben des Deckels und Ausschütten der Ampulle aus der Aussenkapsel;

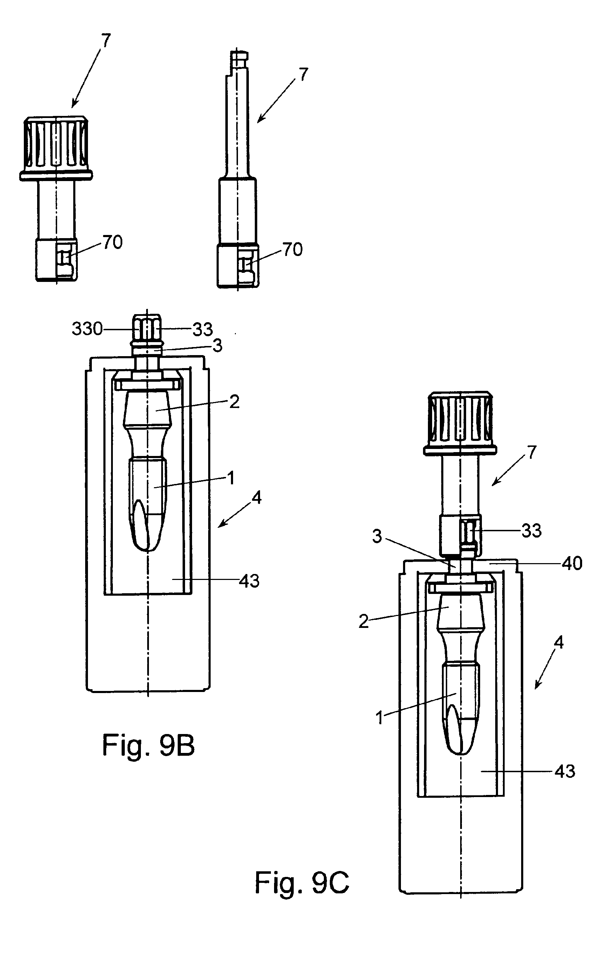

- Figur 9B:: *Schritt 2 -* Bereitstellung der jeweiligen Kupplungsstücke für die alternativen Eindrehinstrumente zum Ansetzen an den Adapter;
- Figur 9C:: *Schritt 3 -* Ansetzen einer Ratschenkupplung an den Adapter;

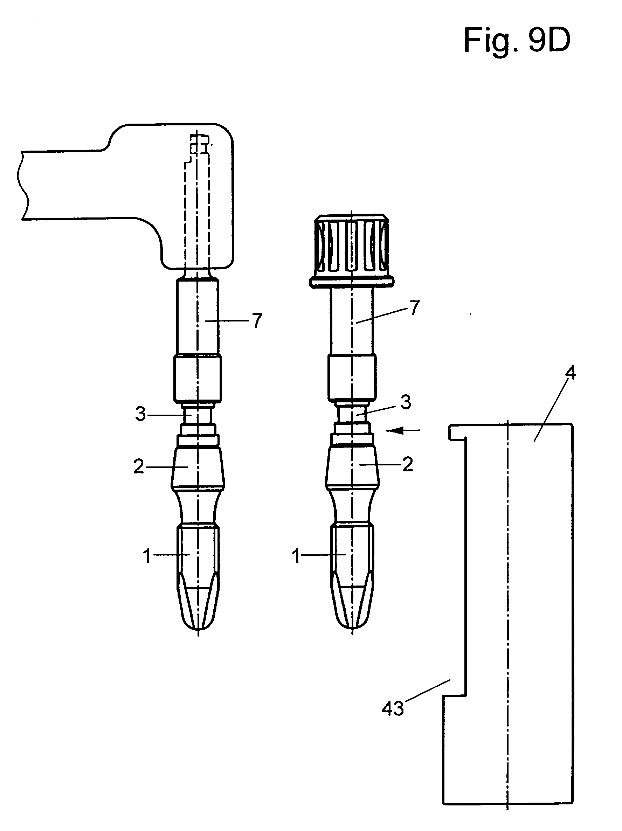

- Figur 9D:: *Schritt 4 -* Entnahme des Implantats aus der Ampulle mit an den Adapter alternativ angesetzter Ratschenkupplung oder einem Kupplungsstück für motorischen Antrieb;

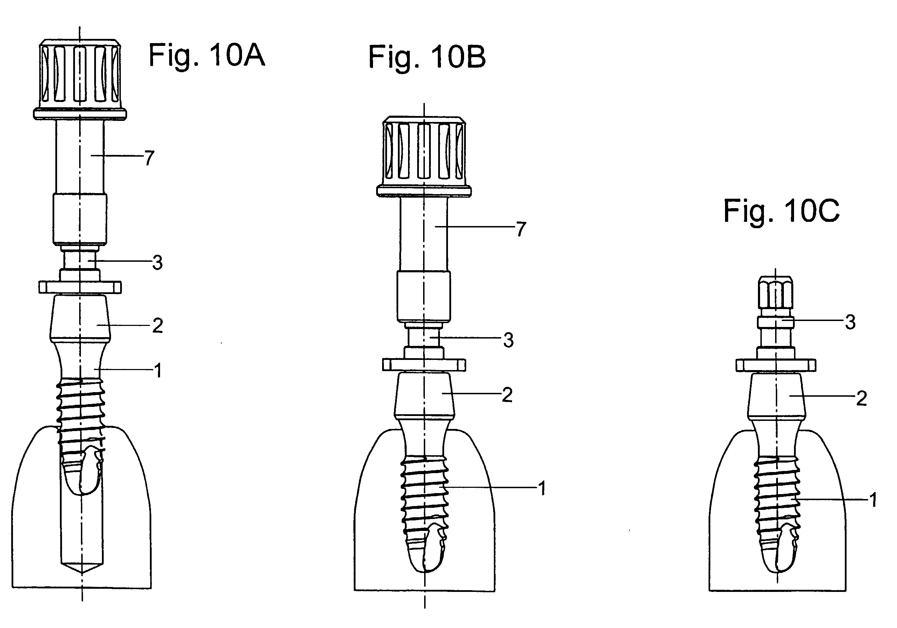

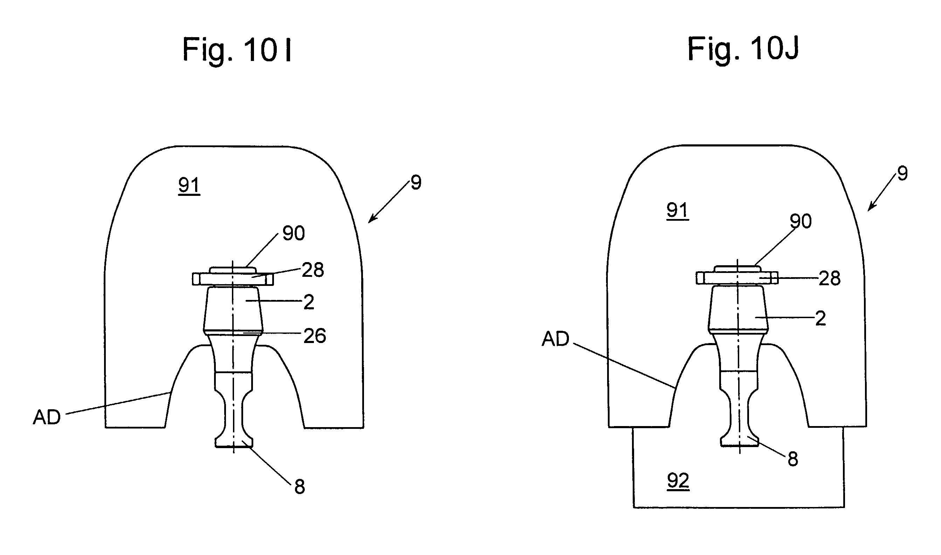

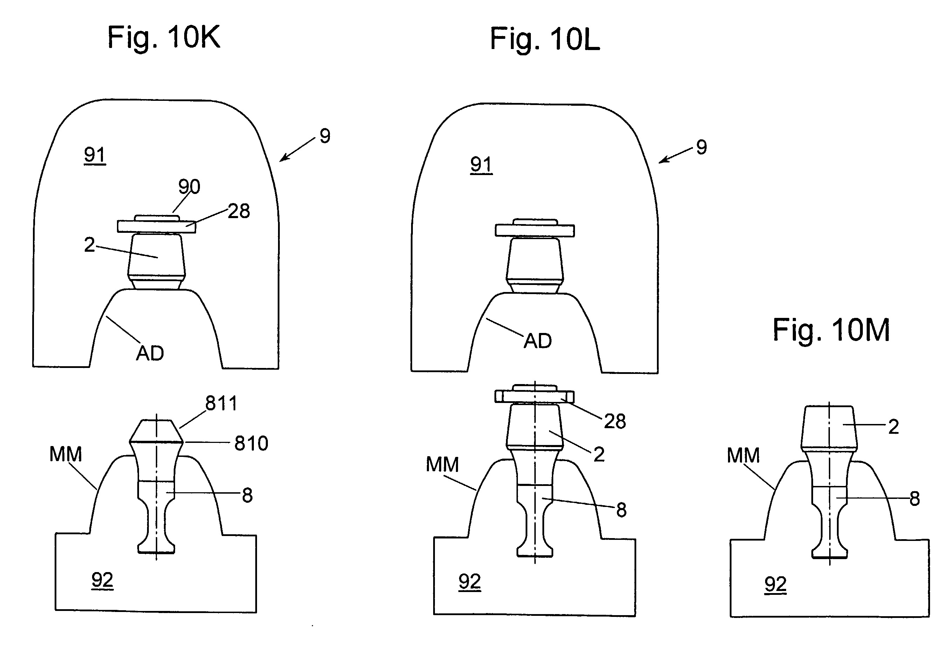

- Figur 10A:: *Schritt 5 -* an den Adapter alternativ angesetzte Ratschenkupplung und Einschrauben des Implantats in den Knochen;
- Figur 10B:: *Schritt 6 -* Eindrehen des Implantats in den Knochen bis zum Erreichen der vorgesehenen Tiefe;
- Figur 10C:: *Schritt 7*- nach beendetem Eindrehen des Implantats Entfernen der Ratschenkupplung vom Adapter;

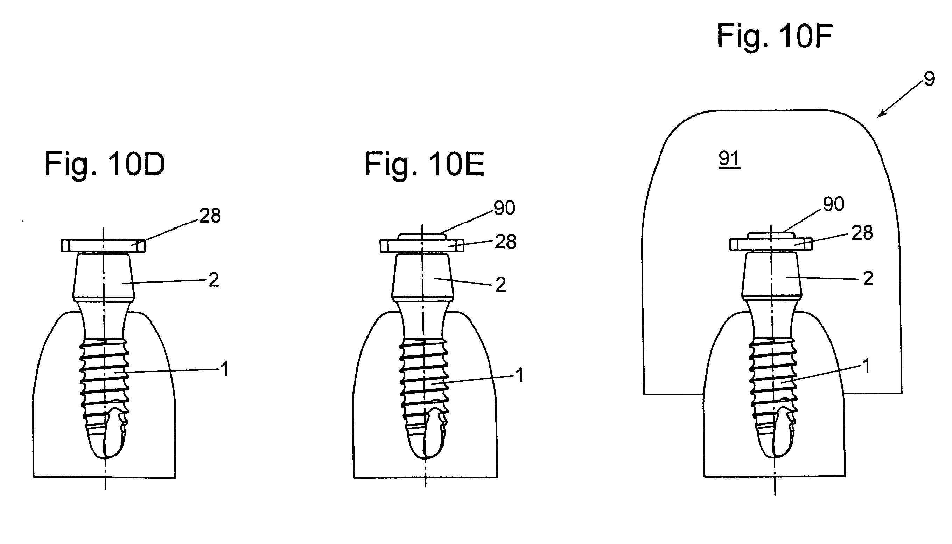

- Figur 10D:: *Schritt 8 -* Herausziehen des Adapters aus dem gesetzten Implantat mit der diesem aufgerastet verbleibenden Übertragungskappe;
- Figur 10E:: *Schritt 9 -* Verschliessen der Eintrittsöffnung in die Übertragungskappe;
- Figur 10F:: *Schritt 10* - Aufsetzen des mit Abdruckmasse gefüllten Abdrucklöffels auf das gesetzte Implantat mit der aufgerasteten Übertragungskappe zur Abdrucknahme;

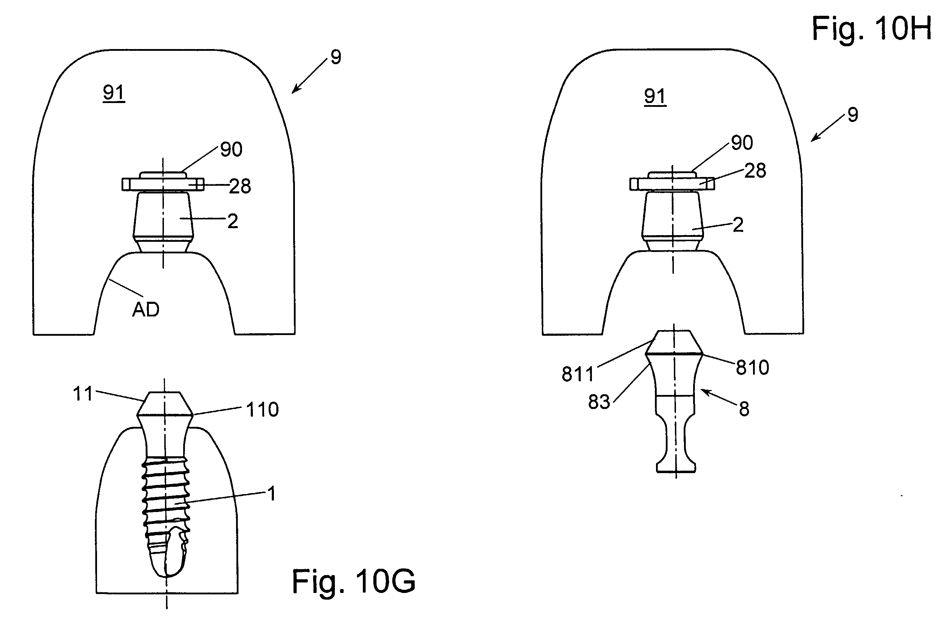

- Figur 10G:: *Schritt 11 -* Abziehen des Abdrucklöffels vom gesetzten Implantat, die Übertragungskappe verbleibt im Abdrucklöffel, der Abdruck ist genommen;
- Figur 10H:: *Schritt 12* - Heranführen eines Manipulierimplantats an die im Abdrucklöffel verbliebene Übertragungskappe;
- Figur 10I:: *Schritt 13* - Einstecken des Manipulierimplantats in die im Abdrucklöffel verbliebene Übertragungskappe;
- Figur 10J:: *Schritt 14 -* Auffüllen des Abdrucks, in dem das Manipulierimplantat steckt, mit Abdruckmasse;
- Figur 10K:: *Schritt 15 -* Entfernen des Abdrucklöffels vom erhaltenen Meistermodell, im Abdrucklöffel verbleibt die Übertragungskappe, im Meistermodell verbleibt das Manipulierimplantat;
- Figur 10L:: *Schritt 16 -* Aufsetzen der aus dem Abdrucklöffel herausgenommenen Übertragungskappe auf das im Meistermodell steckende Manipulierimplantat; und
- Figur 10M:: *Schritt 17-* Abtrennen des Retentionsflügels von der auf dem Manipulierimplantat steckenden Übertragungskappe.

### Ausführungsbeispiele

Für die gesamte weitere Beschreibung gilt folgende Festlegung: Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A und 1B

Das Implantat **1** hat hier die Gestalt einer Vollschraube und besitzt einen langgestreckten Körper mit dem oben gelegenen Implantatkopf **10,** welcher zuoberst mit dem im Prinzip ringförmigen Kamm **100** abschliesst, der in der horizontalen Ebene liegt. Vom Kamm **100** erstreckt sich die nach apikal konisch erweiterte Implantatschulter **11,** welche an der Schulterkante **110** endet, die am Implantatkopf **10** den maximalen Durchmesser einnimmt. Die Implantatschulter **11** nimmt zur Senkrechten z.B. einen Winkel von 30° ein und kann gegenüber herkömmlichen Dimensionen relativ breit ausgebildet sein. Unterhalb der Schulterkante **110** verjüngt sich der Implantatkopf **10** trompetenförmig und geht in die Wurzelpartie **12** über, so dass unter der Schulterkante **110** eine Hinterschneidung **13** entsteht. Die sich nach apikal erstreckende Wurzelpartie **12** weist das Aussengewinde **14** auf, endet an der Implantatspitze **15** und ist zum Einsetzen in den Knochen bestimmt. Das Aussengewinde **14** ist vorzugsweise selbst-schneidend und besitzt Schneiden **140** im Bereich der Implantatspitze **15.** Innerhalb des Kamms **100** mündet ein sich axial in das Implantat **1,** über die Höhe des Implantatkopfes **10** erstreckendes Sackloch **16.** Im Sackloch **16** ist eine nicht-rotationssymmetrische Innenkontur **17,** z.B. ein Innenachtkant, vorgesehen, der sich etwa bis auf das Niveau der Schulterkante **110** ausdehnt. Unterhalb der Innenkontur **17** liegt ein Innengewindeabschnitt **18,** der zum Bohrungsgrund **19** hin ausläuft. Die Innenkontur **17** dient, wie später beschrieben wird, zur Aufnahme eines Adapters. Der Innengewindeabschnitt **18** ist zur Aufnahme einer Einheilschraube bzw. zum Verschrauben der Prothetik, z.B. in Gestalt eines Steges oder einer Brücke, nutzbar. Herkömmlich besteht das Implantat **1** zumeist aus Titan und besitzt äusserlich eine die Osseointegration fördernde spezielle Oberflächenstruktur.

### Figuren 2A und 2B

Die einteilige Übertragungskappe **2** besteht im wesentlichen aus einem topfförmigen Hohlkörper **21** und einem oben den Hohlkörper **21** horizontal überdeckenden, plattenartigen Retentionsflügel **28.** Hohlkörper **21** und Retentionsflügel **28** sind an einer Trennstelle mit einer äusserlich, radial umlaufenden Nut **27,** und der dadurch entstehenden verminderten Wandstärke, miteinander verbunden. Durch die Übertragungskappe **2** erstreckt sich ein Axialdurchgang **20,** der als Zylinderabschnitt **200** auf der Oberseite des Retentionsflügels **28** mündet und sich bis unterhalb des Niveaus der Nut **27** ausdehnt. An den Zylinderabschnitt **200** schliesst sich ein im Querschnitt trapezförmiger Sims **22** an, der die lichte Weite des Axialdurchgangs **20** verengt. Oben auf dem Sims **22** gibt es eine ringförmige Sitzfläche **23,** die sich zum Zylinderabschnitt **200** hin konisch erweitert. Zur Achse des Axialdurchgangs **20** hat der Sims **22** eine senkrecht stehende Ringfläche **24,** von der ein Konusabschnitt **25,** sich hin zur Unterseite des Hohlkörpers **21** erweiternd, erstreckt. Zuunterst besitzt der Hohlkörper **21** eine zirkulär umlaufende, elastische Lippe **26,** die nach innen gewandt, den sich bis zum Ansatz der Lippe **26** erweiternden Axialdurchgang **20** abschliessend wieder einengt. Von der Nut **27** hin zur unteren Mündung des Axialdurchgangs **20** dehnt sich der Hohlkörper **21** äusserlich konisch aus, so dass im Bereich des Simses **22** die grösste Wandstärke vorhanden ist, welche zum Ansatz der Lippe **26** hin abnimmt.

### Figur 2C

In einer Modifikation der Übertragungskappe **2** ist die Mündung des Axialdurchgangs **20,** auf der Oberseite des Retentionsflügels **28,** mit einer sich nach aussen öffnenden Fase **201** versehen und diese Mündung von einem Kragen **29** umgeben. Am Kragen **29** ist eine nach innen gewandte Wulst **290** ausgebildet. Zur Erhöhung der Elastizität des Kragens **29** tragen Einschnitte **291** bei.

### Figuren 3A und 3B

Der dargestellte Adapter **3** besteht aus einem Teil und hat die prinzipielle Gestalt eines mehrfach, unterschiedlich konturierten Bolzens. Der Adapter **3** strukturiert sich in die das untere Ende bildende Mitnehmersektion **30,** die sich anschliessende Haltesektion **31,** die darüber liegende Zwischensektion **32** und den das obere Ende bildenden Steckansatz **33.** Die Mitnehmersektion **30** besitzt eine nicht-rotationssymmetrische Aussenkontur **300** - z.B. einen komplementären Achtkant - zum formschlüssigen Einstecken in die Innenkontur **17** am Implantat **1.** Als Anschrägung **301** läuft die Aussenkontur **300** am Übergang zur Haltesektion **31** aus. Die Haltesektion **31** wird von einem zylindrischen Abschnitt gebildet, der an die Anschrägung **301** ansetzt. Von der Haltesektion **31** aus betrachtet, besteht die Zwischensektion **32** aus einem ersten zylindrischen Bund **320,** einem zweiten zylindrischem Bund **323** und dem zwischen beiden Bunden **320,323** liegenden, im Durchmesser reduzierten Zylinderabschnitt **322.** Oberhalb des zweiten Bundes **323** beginnt der Steckansatz **33** mit einer Ringnut **331** zur Aufnahme eines Halteringes **332,** vorzugsweise in der Gestalt eines O-Ringes. Ansonsten ist der Steckansatz **33** mit einer nichtrotationssymmetrischen Aussenkontur **330** - z.B. ein Achtkant - zum formschlüssigen Aufstecken eines Kupplungsstücks für ein Eindrehinstrument, versehen.

### Figur 3C

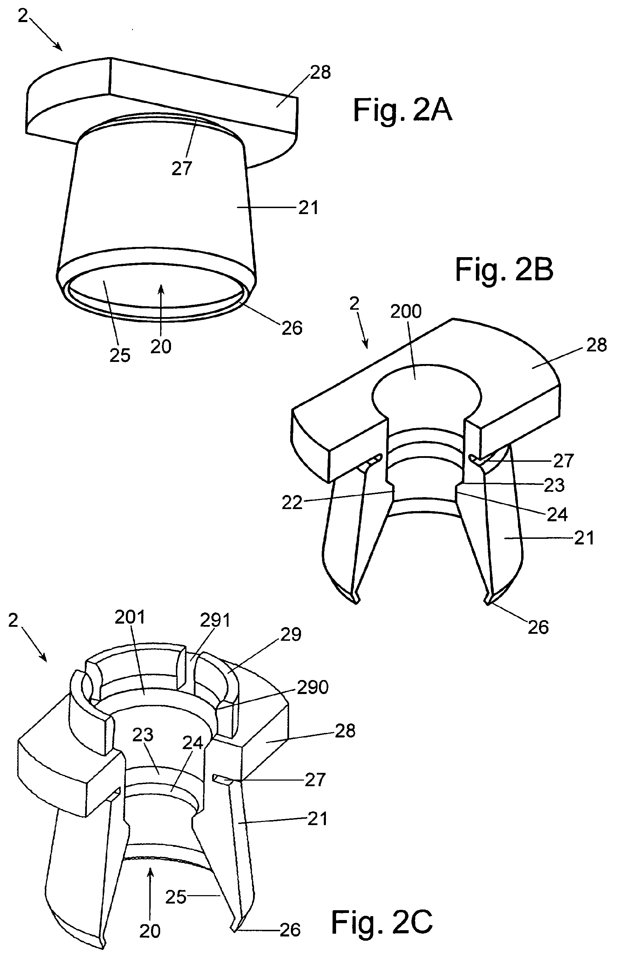

In einer Variation des Adapters **3** - für das Zusammenwirken mit der modifizierten Übertragungskappe **2** gemäss Figur 2C - erstreckt sich die Haltesektion **31** bis auf den ersten zylindrischen Bund **320,** auf dem eine Radialnut **321** angeordnet ist.

### Figuren 4A und 4B

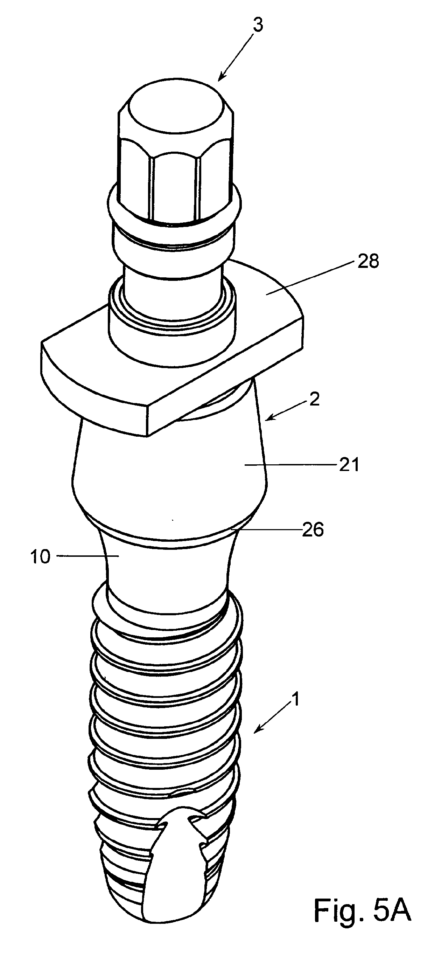

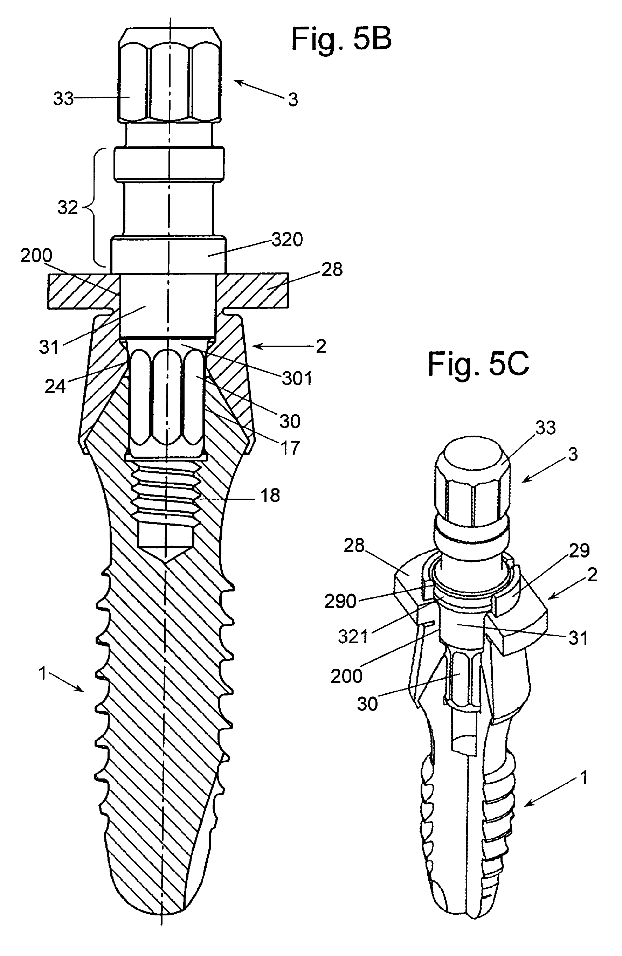

Im aufgerasteten Zustand sitzt die wieder abziehbare Übertragungskappe **2** mit ihrem internen Konusabschnitt **25** auf der Implantatschulter **11** auf und umfasst mit ihrer Lippe **26** die Schulterkante **110,** so dass die Lippe **26** in die Hinterschneidung **13** eingreift, welche im Verhältnis zur Schulterkante **110** einen verminderten Durchmesser hat. Das Sackloch **16** des Implantats **1** und der Axialdurchgang **20** der Übertragungskappe **2** liegen koaxial zueinander. Die Ringfläche **24** mit der geringsten lichten Weite innerhalb der Übertragungskappe **2** kommt oberhalb des Kamms **100** des Implantats **1** zu liegen. Hierbei bleibt der axiale Zugang zur Innenkontur **17** im Implantat **1** für den einzusetzenden Adapter **3** uneingeschränkt offen (s. Figuren 5A und 5B).

### Figuren 5A und 5B

Ist die Übertragungskappe **2** auf das Implantat 1 aufgerastet und der Adapter **3** steckt in voller Tiefe in dieser Kombination, so ragt die Mitnehmersektion **30** des Adapters **3** in die Innenkontur **17** im Implantat **1** und die Haltesektion **31** des Adapters **3** wird mit definiertem Reibschluss vom Zylinderabschnitt **200** der Übertragungskappe **2** umfasst. Die Ringfläche **24** der Übertragungskappe **2** umgibt die Anschrägung **301** und der erste zylindrische Bund **320** der Zwischensektion **32** der Übertragungskappe **2** setzt auf der Oberseite des Retentionstellers **28,** am Rand des hier mündenden Axialdurchgangs **20,** auf. Der Reibschluss zwischen der Übertragungskappe **2** und dem Adapter **3** ist derart dimensioniert, dass kein ungewolltes Herausgleiten des in der Übertragungskappe **2** und dem Implantat **1** steckenden Adapters **3** geschieht, sich jedoch der Adapter **3** mit vertretbarer Belastung für ein eingesetztes Implantat **1** herausziehen lässt.

### Figur 5C

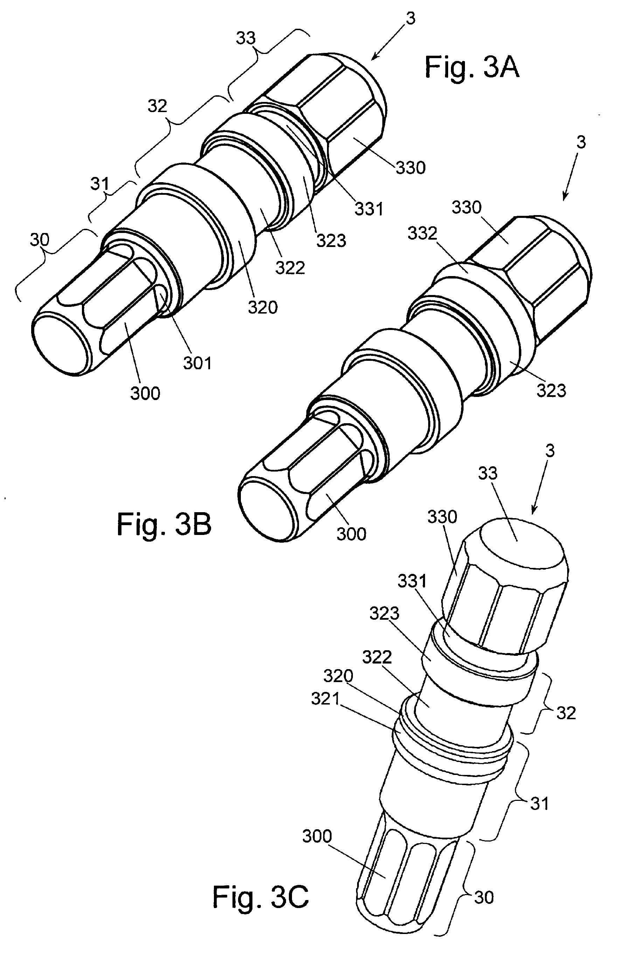

Bei der Anordnung aus Implantat **1,** der modifizierten Übertragungskappe **2** gemäss Figur 2C und dem modifizierten Adapter **3** gemäss Figur 3C wird der Halt des Adapters **3** in der Übertragungskappe **2** noch sicherer gewährleistet. Die Wulst **290** des elastisch spreizbaren Kragens **29** der Übertragungskappe **2** rastet, bei in voller Tiefe eingestecktem Adapter **3,** in die Radialnut **321** im ersten Bund **320** der verlängerten Haltesektion **31** am Adapter **3** ein. Beim Herausziehen des Adapters **3** aus der Anordnung, muss der Reibschluss zwischen Zylinderabschnitt **200** und Haltesektion **31** sowie die rückhaltende Kraft durch den elastisch lösbaren Eingriff zwischen Wulst **290** und Radialnut **321** überwunden werden.

### Figuren 6A bis 6D

Als erste Alternative für ein Behältnis zur Aufbewahrung der Anordnung aus Implantat **1,** Übertragungskappe **2** und Adapter **3,** wird für eine gesamthafte Darstellung die bereits vorbekannte Ampulle **4** beschrieben. Die Ampulle **4** hat auf der ersten Grundflächenseite eine Haltepartie **40** und auf der gegenüber liegenden, zweiten Grundflächenseite eine Standpartie **41.** Zwischen Haltepartie **40** und Standpartie **41** erstreckt sich der Zylindermantel **42** mit der grossflächige Aussparung **43,** die von der Haltepartie **40** bis zur Standpartie **41** verläuft. Durch die seitliche Aussparung **43** ist das in der Ampulle **4** gehaltene Implantat **1** entnehmbar. Der im Bereich der Aussparung **43** verbleibende Zylindermantel **42** hat die Gestalt einer offenen Schale **420,** während in der Standpartie **41** der Zylindermantel **42** einen Rohrabschnitt **421** ergibt. Die zweite Grundflächenseite ist vorzugsweise offen.

Die Haltepartie **40** hat die Form einer kreisrunden Abschlussplatte, so dass diese Grundflächenseite weitgehend geschlossen ist und der Zylindermantel **42** senkrecht auf die Haltepartie **40** trifft. In der Haltepartie **40** befindet sich eine lateral offene Einbuchtung **400,** welche mit der Aussparung **43** in gleiche Richtung weist. Die Einbuchtung **400** ist schlitzförmig mit Abrundungen **401** am peripheren Eintritt. Im Verlauf der Einbuchtung **400** liegt eine Einschnürung **402,** hinter welcher sich die Einbuchtung **400** halbkreisartig erweitert. Hierdurch entstehen an der Haltepartie **40** zwei gegenüber liegende, maulartige Backen **403,404.** Über die Einbuchtung **400** hinaus, weiter in die Haltepartie **40** einschneidend zum Zylindermantel **42** hin, ist eine Dehnungsnut **405** vorgesehen, so dass beim Ein- und Ausdrücken eines ein Implantat **1** tragenden Adapters **3,** sich die Backen **403,404** besser elastisch spreizen lassen. Nachdem beim Eindrücken des Adapters **3** die Einschnürung **402** dessen Querschnitt überwunden hat, rastet der Adapter **3** in der Einbuchtung **400** ein und die Backen **403,404** verengen sich wieder. Eine asymmetrische Materialverteilung und äusserlich am Zylindermantel **42** angeordnete Wülste **44** wirken auf eine rollende Ampulle **4** dämpfend und verhindern das Fortrollen.

### Figur 6E

Die Anordnung aus Implantat **1** mit aufgerasteter Übertragungskappe **2** und in beiden steckendem Adapter **3** ist in die Ampulle **4** eingesetzt. Hierbei ragt das Implantat **1** in das Innere der Ampulle **4**, ohne deren Zylindermantel **42** zu berühren und liegt unterhalb der fensterförmigen Aussparung **43**. Mit der Zwischensektion **32** ist der Adapter **3** in die Einbuchtung **400** der Haltepartie **40** der Ampulle **4** eingerastet. Hierbei liegt der Zylinderabschnitt **322** unterhalb der Einschnürung **402** und die beiden angrenzenden Bunde **320,323** stehen an der Haltepartie **40** an. Der Steckansatz **33** des Adapters **3** ragt frei nach aussen, so dass sich daran ein Instrument zum Ergreifen der Anordnung und Herausziehen aus der Ampulle **4** ansetzen lässt.

### Figur 6F

Als zweite geeignete Alternative für ein Behältnis zur Aufbewahrung der Anordnung aus Implantat **1**, Übertragungskappe **2** und Adapter **3**, wird eine Blisterpackung vorgeschlagen. In der vorteilhaft aus transparentem Kunststoff tiefgezogenen Bodenform **6** ist eine sich über die Aussenkontur der Anordnung weiträumig ausdehnende Vertiefung vorgesehen, die sich in drei Sektionen gliedert, nämlich einerseits in eine Instrumenten-Aussparung **60** für den dort hinein ragenden Steckansatz **33** des Adapters **3**. Andererseits besteht die Vertiefung aus einer Implantat-Aussparung **61**, in die das Implantat **1** mit der aufgerasteten Übertragungskappe **2** hineinragt. Zwischen der Instrumenten-Aussparung **60** und der gegenüber liegenden Implantat-Aussparung **61** sind zwei querlaufende, zueinander fluchtende Führungsschlitze **62** für die leicht klemmende Aufnahme des Retentionstellers **28** der Übertragungskappe **2** angeordnet. Die Tiefe und Raum der Aussparungen **60,61** und Schlitze **62** sind so bemessen, dass in der Instrumenten-Aussparung **60** der nötige Freiraum zum Ansetzen eines Kupplungsstückes und des Eindrehinstruments vorhanden ist. Das Implantat **1** ist in der Implantat-Aussparung **61** so positioniert, dass es weder die seitlichen Wandungen, noch den Grund der Bodenform **6** berührt und keinesfalls mit dem nicht dargestellten Überzug zum Überdecken der Bodenform **6,** in Kontakt kommt. Innerhalb der Bodenform **6** können weitere Vertiefungen **63,** z.B. für die Einlagerung einer Einheilschraube, vorhanden sein.

### Figuren 7A und 7B

Im komplettierten Zustand ist die Ampulle **4** mit der darin eingesetzten Anordnung, gebildet aus Implantat **1,** Übertragungskappe **2** und Adapter **3** in eine Aussenkapsel **5** eingesetzt. Die Aussenkapsel **5** besteht aus einem hohlen Zylinder **50,** dessen Boden **51** geschlossen ist, und einem aufschraubbaren Verschlussdeckel **56.** Innerlich, beabstandet zum Boden **51** ist am Rand des Zylinders **50** eine umlaufende Aufsetzschulter **52** vorgesehen, die als axialer Anschlag für die eingesetzte Ampulle **4** dient. Vom Niveau der Aufsetzschulter **52** und zentrisch im Zylinder **50** gelegen, erstreckt sich eine Trichteraufnahme **53** mit einem Sackloch **54** zum Boden **51** hin. Der Innenraum des Zylinders **50** erweitert sich zur Öffnung leicht konisch, um das Ausschütten der eingesetzten Ampulle **4** zu erleichtern und ein Verklemmen auszuschliessen. Der Verschlussdeckel **56** besitzt einen Boden **57,** von dem sich eine radial umlaufende Schulter **58** in die Öffnung des Zylinders **50** erstreckt. Auch die Schulter **58** des Verschlussdeckels **56** stellt einen axialen Anschlag für die eingesetzte Ampulle **4** dar.

### Figuren 8A und 8B

Ist die bestückte Ampulle **4** in die Aussenkapsel **5** eingesetzt, so ist die Haltepartie **40** der Ampulle **4** dem Boden **51** der Aussenkapsel **5** zugewandt, während die Standpartie **41** der Ampulle **4** in Richtung des Verschlussdeckels **56** der Aussenkapsel **5** weist. Der Steckansatz **33** des Adapters **3** ragt in das intern der Aussenkapsel **5** gelegene Sackloch **54** hinein. Bei aufgeschraubtem Verschlussdeckel **56** wird die Ampulle **4** zwischen der Aufsetzschulter **52** des Zylinders **50** und der Schulter **58** am Verschlussdeckel **56** axial stabilisiert.

### Figuren 9A bis 9D

Anhand der nachstehenden Figurenfolge wird das schrittweise Handling der Anordnung mit dem Implantat **1,** der Übertragungskappe **2** und dem Adapter **3,** - unter beispielhafter Verwendung einer Ampulle **4** mit der Aussenkapsel **5** als Behältnis - zunächst bis vor dem Einsetzen des Implantats **1** in den Knochen erläutert. Das Beispiel betrifft das Einsetzen eines Dentalimplantats in den menschlichen Kieferknochen. Ausgangspunkt ist, wo die Anordnung, bestehend aus dem Implantat **1,** der Übertragungskappe **2** und dem Adapter **3,** in einer Ampulle **4** eingesetzt ist, die sich ihrerseits in einer Aussenkapsel **5** befindet. Der in der Haltepartie **40** der Ampulle **4** klemmende Adapter **3** hält das Implantat **1** mit der aufgerasteten Übertragungskappe **2** in Position. Der gesamte Inhalt der Aussenkapsel **5** ist steril.

### Figur 9A → Schritt 1:

Um die Aussenkapsel **5** zu öffnen, wurde vom Zylinder **50** der Verschlussdeckel **56** abgenommen. Die Ampulle **4** wird mit der darin enthaltenen Anordnung aus dem jetzt offenen Zylinder **50** der Aussenkapsel **5** auf eine sterile Unterlage gekippt.

### Figur 9B → Schritt 2:

Aus der Ampulle **4** ragt der Steckansatz **33** mit dem Aussenvielkant heraus. Zum Ansetzen eines Eindrehinstruments - z.B. eine Ratsche oder ein zahnärztliches Handstück - werden eine Ratschenkupplung **7** oder eine Kupplung **7** für das zahnärztliche Handstück bereitgehalten. Die Kupplungen **7** sind mit einer zur Aussenkontur **330** am Steckansatz **33** komplementären Steckaufnahme **70** versehen.

### Figure 9C → Schritt 3:

Ist eine Ratsche als Eindrehinstrument vorgesehen, steckt man eine Ratschenkupplung **7** auf den Steckansatz **33,** der über die Haltepartie **40,** aus der Ampulle **4** herausragt.

### Figur 9D → Schritt 4:

Mit der an den Steckansatz **33** alternativ angesetzten Ratschenkupplung **7** oder einem Kupplungsstück **7** für motorischen Antrieb, wird die Anordnung aus Implantat **1,** Übertragungskappe **2** und Adapter **3** aus der Ampulle **4** entnommen und zur Einsatzstelle transferiert.

### Figuren 10A bis 10M

Anhand der folgenden Figurenserie wird das weitere schrittweise Handling der Anordnung mit dem Implantat **1,** der Übertragungskappe **2** und dem Adapter **3,** bis zur Erstellung des Meistermodells und angrenzend darüber hinaus, erläutert. Das Beispiel bezieht sich wiederum auf die Dentalimplantologie.

### Figur 10A → Schritt 5:

Mit der an den Adapter **3** angesetzten Ratschenkupplung **7** wird das Implantat **1** zusammen mit der aufgerasteten Übertragungskappe **2** in den Knochen eingeschraubt. In der Regel dreht man das Implantat **1** zunächst leicht von Hand in die Sacklochbohrung im Kieferknochen ein, bevor das Eindrehinstrument (nicht gezeigt) angesetzt wird.

### Figur 10B → Schritt 6:

Das Implantat **1** wird bis zum Erreichen der vorgesehenen Tiefe in den Knochen eingedreht.

### Figur 10C → Sctritt 7:

Nach beendetem Eindrehen wird die Ratschenkupplung **7** vom Adapter **3** abgenommen.

### Figur 10D → Schritt 8:

Der Adapter **3** wurde aus dem gesetzten Implantat **1,** mit der weiterhin aufgerastet verbleibenden Übertragungskappe **2,** gegen den Widerstand des Reibschlusses und den eventuell zusätzlichen kraftmässigen Eingriff zwischen Übertragungskappe **2** und Adapter **3,** herausgezogen.

### Figur 10E → Schritt 9:

Der nach dem Herausziehen des Adapters **3** nach oben offene, an der Oberseite des Retentionsflügels **28** mündende Axialdurchgang **20** in die Übertragungskappe **2,** wird mit einem Verschlussmedium **90** abgedichtet.

### Figur 10F → Schritt 10:

Über das eingesetzte Implantat **1,** mit der weiterhin aufgerasteten Übertragungskappe **2,** wird zur Abdrucknahme ein mit Abdruckmasse **91** gefüllter Abdrucklöffel **9** aufgesetzt.

### Figur 10G → Schritt 11:

Der Abdrucklöffel **9** wird vom gesetzten Implantat **1** abgezogen, wobei die Übertragungskappe **2** eingebettet in der Abdruckmasse **91** im Abdrucklöffel **9** verbleibt. Beim Abziehen des Abdrucklöffels **9** öffnet sich die elastische Lippe **26** der Übertragungskappe **2** und springt über die Schulterkante **110** des Implantats **1.** Der Abdruck **AD** ist genommen und erscheint als solcher im Abdrucklöffel **9.**

### Figur 10H → Schritt 12:

Ein zum gesetzten Implantat **1** komplementäres Manipulierimplantat **8** wird bereitgestellt. Das Manipulierimplantat **8** besitzt analog eine Schulter **811,** eine Schulterkante **810** und eine Hinterschneidung **83,** wie originär am Implantat **1** die Implantatschulter **11,** die Schulterkante **110** und die Hinterschneidung **13** vorhanden sind.

### Figur 10I → Schritt 13:

Das komplementäre Manipulierimplantat **8** wird in die im Abdrucklöffel **9** verbliebene Übertragungskappe **2** und den genommenen Abdruck **AD** eingesteckt. Hierbei rastet wiederum die Lippe **26** über die Schulterkante **810** am Manipulierimplantat **8** und greift in dessen Hinterschneidung **83** ein.

### Figur 10J → Schritt 14:

Der Abdruck **AD** mit dem darin steckenden Manipulierimplantat **8** wird mit einer Modellmasse **92,** üblicherweise Gips, aufgefüllt.

### Figur 10K → Schritt 15:

Der Abdrucklöffel **9** mit der darin eingebetteten Übertragungskappe **2** wird vom Manipulierimplantat **8** mit der um dieses herum erhärteten Modellmasse **92** getrennt. Um das Manipulierimplantat **8** herum hat man das Meistermodell **MM** gewonnen, das der geometrischen Situation im Patientenmund entspricht.

### Figur 10L → Schritt 16:

Aus dem Abdrucklöffel **9** wird die darin, in Abdruckmasse **91** eingebettete Übertragungskappe **2** herausgenommen und auf das im Meistermodell **MM** steckende Manipulierimplantat **8** aufgerastet.

### Figur 10M → Schritt 17:

Für die weitere Bearbeitung wird der Retentionsflügel **28** von der auf dem Manipulierimplantat **8** steckenden Übertragungskappe **2** abgetrennt.

Die erfindungsgemässe Anordnung ist besonders bei mehreren gesetzten Implantaten **1** für die Steg- oder Brückenversorgung vorteilhaft. Die dem *Schritt 17* nachfolgenden Schritte zur Herstellung einer prothetischen Suprakonstruktion ergeben sich für den Fachmann. Die benachbarten Übertragungskappen **2,** welche auf den im Meistermodell **MM** verankerten Manipulierimplantaten **8** stecken, werden mit einem Steggerüst aus ausbrennbarem Kunststoff überbrückt und anschliessend wird der Verbund von den Manipulierimplantaten **8** abgezogen. Nun bringt man diesen Verbund aus Übertragungskappen **2** und Steggerüst in eine Einbettmasse. Nach dem Erhitzen der Einbettmasse entsteht ein Hohlraum, der mit - z.B. Titan oder Gold - ausgegossen, dem definitiven Steggerüst entspricht, welcher nach der üblichen Oberflächenbehandlung auf die im Patientenmund eingebrachten Implantate **1** aufgesetzt wird.

Zur vorbeschriebenen Anordnung sind weitere konstruktive Variationen von praktischer Relevanz, die deshalb nachstehend dargestellt werden:
- Es ist eine Umkehrung des Eingriffs zwischen der Innenkontur **17** im Implantat **1** und der Mitnehmersektion **30** am Adapter **3** möglich. Bei einer solchen Konstruktion weist das Implantat **1** am Implantatkopf **10,** anstelle der unterhalb der Implantatschulter **11** gelegenen Innenkontur **17,** eine über der Implantatschulter angeordnete, nicht-rotationssymmetrische Aussenkontur auf. Der Adapter **3** wird dann an seiner unteren Mitnehmersektion **30** dazu komplementär mit einer Innenkontur ausgestattet, die sich formschlüssig auf die Aussenkontur am Implantat **1** aufstecken lässt.
- Das in den Figuren 10D bis 10M beschriebene Prozedere zielt vorrangig auf die Erstellung einer Suprakonstruktion für Dentalbrücken und -stege mit ab, die sich auf mehr als ein gesetztes Implantat **1** stützen. Vor der Abdrucknahme wurde der Adapter **3** aus der Kombination von Implantat **1,** Übertragungskappe **2** und Adapter **3** herausgezogen und der freiwerdende, dann nach oben offene, an der Oberseite des Retentionsflügels **28** mündende Axialdurchgang **20** in die Übertragungskappe **2,** mit einem Verschlussmedium **90** abgedichtet (s. Figuren 10D bis 10F).
Bei der prothetischen Versorgung eines gesetzten Implantats **1** für einen künstlichen Einzelzahn, bedarf es der Übertragung der Drehstellung zwischen dem gesetzten Implantat **1** mit eventuellem Abutment und der umgebenden Mundgeometrie. Zu diesem Zweck wird in Abweichung zum vorbeschriebenen Verfahrensablauf der Adapter 3 für die Abdrucknahme in der Übertragungskappe **2** und dem Implantat **1** stecken gelassen, im Abdrucklöffel **9** mit eingebettet und für die weiteren Schritte bei der Herstellung des Meistermodells **MM** genutzt.
- Der an der Übertragungskappe **2** bisher vorgesehene Retentionsflügel **28,** welcher sich oberhalb einer die Wandung verschmälernden Nut **27** an den Hohlkörper **21** anschliesst und die prinzipielle Form einer rechteckigen, abgerundeten Platte hat, könnte umgestaltet werden. Die Nut **27** ist verzichtbar, der Flügel **28** könnte ohne rotationssichernde Wirkung als kreisrunder Teller ausgebildet sein und schliesslich kann der Flügel **28** ganz entfallen.

## Patentansprüche

1. Anordnung für das Handling eines in Knochen einzusetzenden Implantats (**1**) mit einer auf das Implantat (**1**) lösbar aufsteckbaren Übertragungskappe (**2**) und einem am Implantat (**1**) eingreifenden Adapter (**3**);
a) das Implantat (**1**) besitzt einen Implantatkopf (**10**) und eine sich vom Implantatkopf (**10**) erstreckende Wurzelpartie (**12**);
aa) der Implantatkopf (**10**) weist eine intern gelegene, nicht-rotationssymmetrische Innenkontur (**17**) oder alternativ eine derartige Aussenkontur, eine äussere Implantatschulter (**11**) und eine unterhalb der Implantatschulter (**11**) gelegene Schulterkante (**110**) auf;
ab) unterhalb der Schulterkante (**110**) besitzt das Implantat (**1**) eine Hinterschneidung (**13**);
b) die Übertragungskappe (**2**) weist auf:
ba) eine zur Implantatschulter (**11**) komplementäre Kontaktfläche (**25**); und
bb) eine die Schulterkante (**110**) unterfassende, in die Hinterschneidung (**13**) eingreifende elastische Lippe (**26**);
c) der Adapter (**3**) weist auf:
ca) eine Mitnehmersektion (**30**), die zum formschlüssigen Eingriff mit der Innenkontur (**17**) bzw. Aussenkontur am Implantat (**1**) bestimmt ist; und
cb) einen Steckansatz (**33**), der zum Ansetzen eines Instruments bestimmt ist; **dadurch gekennzeichnet, dass**
d) die Übertragungskappe (**2**) einen Axialdurchgang (**20**) zum Durchtritt des Adapters (**3**) zum Implantat (**1**) aufweist; und
e) bei auf das Implantat (**1**) aufgesteckter Übertragungskappe (**2**) und eingestecktem Adapter (**3**), dessen Mitnehmersektion (**30**) an der Innenkontur (**17**) bzw. an der alternativ vorhandenen Aussenkontur formschlüssig angreift, wobei der Adapter (**3**) im Axialdurchgang (**20**) liegt und der Steckansatz (**33**) des Adapters (**3**) aus der Übertragungskappe (**2**) herausragt.

2. Anordnung nach Anspruch 1, **dadurch gekennzeichnet, dass**
a) der durch den Axialdurchgang (**20**) durchtretende Adapter (**3**) und die Übertragungskappe (**2**) lösbar miteinander verbunden sind; wobei
b) die Lösekraft für das Trennen der Verbindung zwischen Implantat (1) und Übertragungskappe (**2**) grösser bemessen ist, als Lösekraft für das Trennen der Verbindung zwischen Übertragungskappe (**2**) und Adapter (**3**).

3. Anordnung nach Anspruch 1 oder 2, **dadurch gekennzeichnet, dass** zur lösbaren Verbindung zwischen Übertragungskappe (**2**) und Adapter (**3**):
a) die Übertragungskappe (**2**) einen inneren Abschnitt (**200**) und der Adapter (**3**) eine Haltesektion (**31**) aufweisen, die miteinander eine Reibschlussverbindung eingehen; oder
b) die Übertragungskappe (**2**) eine elastisch verformbare Kontur (**290**) und der Adapter (**3**) eine dazu komplementäre Gegenkontur (**321**) aufweisen, die miteinander eine kraftschlüssige Verbindung eingehen; oder
c) der innere Abschnitt (**200**) und die Haltesektion (**31**) für die Reibschlussverbindung sowie die Kontur (**290**) und die Gegenkontur (**321**) für die Kraftschlussverbindung zusammen vorhanden sind.

4. Anordnung nach Anspruch 3, **dadurch gekennzeichnet, dass**
a) der innere Abschnitt (**200**) an der Übertragungskappe (**2**) eine zylindrische Innenwandung ist;
b) die Haltesektion (**31**) am Adapter (**3**) ein Zylinderabschnitt ist;
c) die verformbare Kontur (**290**) an der Übertragungskappe (**2**) eine den Axialdurchgang (**20**) verengende Wulst (**290**) ist; und
d) die Gegenkontur (**321**) am Adapter (**3**) eine Radialnut (**321**) ist, in welche die Wulst (**290**) einrastet.

5. Anordnung nach Anspruch 1, **dadurch gekennzeichnet, dass**
a) die Übertragungskappe (**2**) einstückig ist und sich aus einem topfförmigen Hohlkörper (**21**) und einem sich daran angeordneten Retentionsflügel (**28**) zusammensetzt;
b) der Axialdurchgang (**20**) einerseits an der Unterseite des Hohlkörpers (**21**) und andererseits auf der Oberseite des Retentionsflügels (**28**) mündet;
c) die elastische Lippe (**26**) den Axialdurchgang (**20**) einengt und zuunterst am Hohlkörper (**21**) vorgesehen ist; und
d) der Hohlkörper (**21**) die innere Kontaktfläche (**25**) als auf die Implantatschulter (**11**) passenden Konusabschnitt (**25**) aufweist.

6. Anordnung nach Anspruch 5, **dadurch gekennzeichnet, dass**
a) zwischen Hohlkörper (**21**) und Retentionsflügel (**28**) eine Nut (**27**) zum Abtrennen des Retentionsflügels (**28**) vorhanden ist;
b) der Retentionsflügel (**28**) sich im wesentlichen waagerecht, also senkrecht zum Axialdurchgang (**20**) stehend, erstreckt; und
c) auf der Oberseite des Retentionsflügels (**28**) der mündende Axialdurchgang (**20**) von einem Kragen (**29**) umgeben ist, an dem eine nach innen gewandte Wulst (**290**) ausgebildet ist und der zur Erhöhung der Elastizität des Kragens (**29**) Einschnitte (**291**) aufweisen kann.

7. Anordnung nach Anspruch 1, **dadurch gekennzeichnet, dass**
a) die nicht-rotationssymmetrische Innenkontur (**17**) im Implantat (**1**) ein Innenvielkant, z.B. ein Achtkant, ist; oder die alternativ vorgesehene Aussenkontur am Implantat (**1**) ein Aussenvielkant, z.B. ein Achtkant, ist;
b) die Mitnehmersektion (**30**) am Adapter (**3**) - bei vorhandener Innenkontur (**17**) im Implantat (**1**) - ein Aussenvielkant, z.B. ein Achtkant, ist; oder
c) die Mitnehmersektion (**30**) am Adapter (**3**) - bei alternativ vorhandener Aussenkontur am Implantat (**1**) - ein Innenvielkant, z.B. ein Achtkant, ist; und
d) der Steckansatz (**33**) am Adapter (**3**) ein Aussenvielkant ist.

8. Anordnung nach einem der Ansprüche 1, 3, 4 oder 7, **dadurch gekennzeichnet, dass** am Adapter (**3**)
a) sich an die Mitnehmersektion (**30**) die Haltesektion (**31**) anschliesst;
b) zwischen Haltesektion (**31**) und Steckansatz (**33**) eine Zwischensektion (**32**) liegt;
c) die Zwischensektion (**32**) einen ersten (**320**) und einen zweiten Bund (**323**) aufweist, zwischen denen ein im Durchmesser reduzierter Abschnitt (**322**) liegt; und
d) der erste Bund (**320**) die Radialnut (**321**) aufweist und zwischen dem Steckansatz (**33**) und dem zweiten Bund (**323**) eine Ringnut (**331**) zur Aufnahme eines Halteringes (**332**) vorhanden ist.

9. Anordnung nach Anspruch 1, **dadurch gekennzeichnet, dass**
a) sich das Implantat (**1**) unterhalb der Schulterkante (**110**) zur Wurzelpartie (**12**) hin trompetenförmig verjüngt, wodurch die Hinterschneidung (**13**) entsteht;
b) die Implantatschulter (**11**) eine Neigung im Bereich von 30° aufweist;
c) die Wurzelpartie (**12**) mit einem Aussengewinde, vorzugsweise selbst-schneidend, versehen ist; und
d) bei vorhandener Innenkontur (**17**) am Implantat (**1**) oder bei alternativ vorhandener Aussenkontur am Implantat (**1**), innerhalb eines Sacklochs (**16**), ein Innengewindeabschnitt (**18**) angeordnet sein kann.

10. Anordnung nach Anspruch 1, **dadurch gekennzeichnet, dass**
a) die Kombination aus Implantat (**1**), auf das Implantat (**1**) aufgesteckter Übertragungskappe (**2**) und durch die Übertragungskappe (**2**) durchgestecktem Adapter (**3**), für die operative Applikation in einem sterilen Behältnis (**4,6**) aus einer fixierten Lage lösbar, angeordnet ist; und
b) hierbei der Steckansatz (**33**) für das Ergreifen mittels eines Instruments, zumeist ein Eindrehinstrument, mit eventuell zuvor an den Steckansatz (**33**) angestecktem Kupplungsteil (**7**), zugänglich positioniert ist.

11. Anordnung nach Anspruch 10, **dadurch gekennzeichnet, dass**
a) das Behältnis für die Kombination (**1,2,3**) eine in eine Aussenkapsel (**5**) einsetzbare Ampulle (**4**) ist;
b) die Ampulle (**4**) aufweist:
ba) einen äusseren Mantel (**42**);
bb) eine seitliche, grossflächige Aussparung (**43**) im Mantel (**42**), durch welche das in der Ampulle (**4**) gehalterte Implantat (**1**) herausnehmbar ist; und
bc) eine Haltepartie (**40**) mit einer lateral offenen Einbuchtung (**400**), die mit der Aussparung (**43**) in die gleiche Richtung weist; und
c) der die Übertragungskappe (**2**) und das Implantat (**1**) tragende Adapter (**3**), mit seiner Zwischensektion (**32**), in die Einbuchtung (**400**) lösbar eingerastet ist, wodurch das vom Adapter (**3**) getragene Implantat (**1**) berührungslos in der Ampulle (**4**) gelagert ist.

12. Anordnung nach Anspruch 10, **dadurch gekennzeichnet, dass**
a) das Behältnis für die Kombination (**1,2,3**) eine Blisterpackung mit einer tiefgezogenen Bodenform (**6**) ist;
b) die Bodenform (**6**) eine mehrgliedrige Vertiefung (**60,61,62**), die sich über die Aussenkontur der Anordnung (**1,2,3**) weiträumig ausdehnt, aufweist, nämlich:
ba) eine Instrumenten-Aussparung (**60**) für den dort hinein ragenden Steckansatz (**33**) des Adapters (**3**);
bb) eine der Instrumenten-Aussparung (**60**) gegenüber liegende Implantat-Aussparung (**61**), in die das Implantat (**1**) mit der aufgesteckten Übertragungskappe (**2**) hineinragt; und
bc) zwischen der Instrumenten-Aussparung (**60**) und der Implantat-Aussparung (**61**) zwei querlaufende, zueinander fluchtende Führungsschlitze (**62**) für die leicht klemmende Aufnahme des Retentionsflügels (**28**) der Übertragungskappe (**2**), wodurch das von der Übertragungskappe (**2**) gestützte Implantat (**1**) berührungslos in der Bodenform (**6**) gelagert ist.

13. Anordnung nach Anspruch 12, **dadurch gekennzeichnet, dass**
a) die Bodenform (**6**) mit einem Überzug überdeckt ist; und
b) innerhalb der Bodenform (**6**) weitere Vertiefungen (**63**), z.B. für die Einlagerung einer Einheilschraube, vorhanden sein können.

14. Anordnung nach Anspruch 1, **dadurch gekennzeichnet, dass**
a) die Übertragungskappe (**2**) nach genommenem Abdruck (**AD**), beim Abziehen einer Abdruckform (**9**) sich vom Implantat (**1**) löst und in der Abdruckform (**9**) verbleibt;
b) in die in der Abdruckform (**9**) verbliebenen Abdruckkappe (**2**) ein Manipulierimplantat (**8**) mit einer analogen Schulterkante (**810**) und Hinterschneidung (**83**) rastend einsteckbar ist; und
c) beim Trennen des mit Modellmasse (**92**) aufgefüllten Abdrucks (**AD**), ein Meistermodell (**MM**) mit darin eingebettetem Manipulierimplantat (**8**) entsteht; und hierbei die vorzugsweise aus ausbrennbarem Kunststoff bestehende Übertragungskappe (**2**) wieder in der Abdruckform (**9**) verbleibt.
